(19) Europäisches Patentamt
European Patent Office
Office européen des brevets

(11) Veröffentlichungsnummer: **0 084 515**
**B1**

(12) **EUROPÄISCHE PATENTSCHRIFT**

(45) Veröffentlichungstag der Patentschrift: **01.04.87**

(51) Int. Cl.⁴: **C 08 K 5/42**, C 08 L 61/00, C 09 D 3/48

(21) Anmeldenummer: **83810004.8**

(22) Anmeldetag: **05.01.83**

# (54) Säurehärtbare Zusammensetzung enthaltend einen maskierten Härtungskatalysator und Verfahren zu deren Härtung.

(30) Priorität: **11.01.82 CH 123/82**
**31.08.82 CH 5174/82**

(43) Veröffentlichungstag der Anmeldung:
**27.07.83 Patentblatt 83/30**

(45) Bekanntmachung des Hinweises auf die Patenterteilung:
**01.04.87 Patentblatt 87/14**

(84) Benannte Vertragsstaaten:
**BE DE FR GB IT NL SE**

(56) Entgegenhaltungen:
**DE - A - 2 842 002**

(73) Patentinhaber: **CIBA-GEIGY AG, Klybeckstrasse 141, CH-4002 Basel (CH)**

(72) Erfinder: **Kirchmayr, Rudolf, Dr., Ettingerstrasse 9, CH-4147 Aesch (CH)**
Erfinder: **Rutsch, Werner, Dr., Kleestrasse 7, CH-4153 Reinach (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 084 515 B1

ACTORUM AG

**Beschreibung**

Die Erfindung betrifft Zusammensetzungen auf Basis eines säurehärtbaren Harzes enthaltend einen maskierten Härtungskatalysator sowie ein Verfahren zur Härtung dieses Harzes durch Bestrahlung mit kurzwelligem Licht und anschliessendes Erwärmen.

Säurehärtbare Harze werden vor allem als Bindemittel für Lacke, Druckfarben und Anstrichstoffe verwendet, wenn hohe Einbrenntemperaturen vermieden werden sollen. Säurehärtbare Harze können Aminoharze sein, Melaminharze, Harnstoff-Formaldehydharze, Phenol-Formaldehydharze sowie Gemische solcher Harze mit Alkyd-, Polyester- oder Acrylharzen. Weitere säurehärtbare Harze sind Methylol-Verbindungen, Methylol-äther von Polycarbonsäureimiden z.B. Derivate von Polyacryl- oder Methacrylsäure, Urethanalkyde sowie Harze, die Carbonsäureester von N-Methylolimiden enthalten. Als saure Härtungskatalisatoren werden vorwiegend organische Säuren verwendet, darunter beispielsweise Sulfonsäuren, insbesondere p-Toluolsulfonsäure. Da diese Säuren bereits bei Raumtemperatur eine langsame Härtung bewirken, werden sie dem Harz erst kurz vor dessen Applikation zugesetzt, was mit den bekannten Problemen der Einhaltung bestimmter Topfzeiten verbunden ist. Zur Ermöglichung von Einkomponenten-Systemen hat man daher bereits die Verwendung maskierter Härtungskatalysatoren vorgeschlagen, aus denen bei erhöhter Temperatur die Säure freigesetzt wird. Beispiele hierfür sind Aminsalze von aromatischen Sulfonsäuren, wie die in der US-Patentschrift 3 474 054 vorgeschlagenen Pyridinsalze. Diese haben den Nachteil, dass sie bereits während der Lagerung eine langsame Härtung bewirken. Ausserdem entstehen dabei Geruchsprobleme.

Es wurde weiterhin vorgeschlagen, maskierte Härtungskatalysatoren zu verwenden, aus denen durch Bestrahlung mit UV-Licht der eigentliche Härtungskatalysator gebildet wird. Beispiele hierfür sind aromatische Sulfoniumsalze von komplexen Anionen, wie sie in der US-Patentschrift 4 102 687 beschrieben sind. Solche Sulfoniumsalze sind jedoch schwierig in reiner Form herzustellen, sie sind von geringer Reaktivität und neigen zur Vergilbung der Harze. Nach dem gleichen Prinzip wirkend wurden bereits photolabile Sulfonsäureester vorgeschlagen, so beispielsweise Sulfonsäureester des α-Hydroxymethylbenzoins, wie sie z.B. in der DE-OS 1 919 678 beschrieben sind. Diese Verbindungen genügen jedoch nicht in jeder Hinsicht den gestellten Anforderungen wie beispielsweise einwandfreie Löslichkeit in den säurehärtbaren Harzsystemen, keine Vergilbung der Harze nach der Härtung sowie keine negative Beeinflussung des Lackierens nach dem elektrophoretischen Auftrageverfahren.

Es wurde nun gefunden, dass Sulfonsäureester bestimmter α-Hydroxycarbonylverbindungen, die technisch einfach herstellbar sind, diese Anforderungen erfüllen, indem sie im Dunkeln praktisch unbegrenzt lagerbar sind, bei Belichtung mit kurzwelligem Licht jedoch rasch zerfallen, was eine anschliessende säurekatalytische Härtung der Harze bei relativ niedriger Temperatur ermöglicht und nicht zur Vergilbung der Harze führt.

Gegenstand der Erfindung ist eine härtbare Zusammensetzung enthaltend ein säurehärtbares Harz und als maskierten Härtungskatalysator mindestens eine Verbindung der Formel I oder II

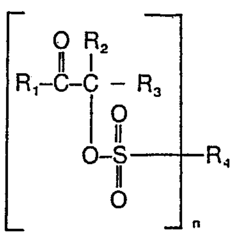

I

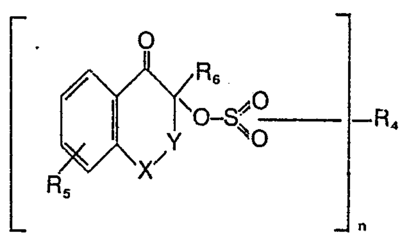

,

II

worin

n die Zahl 1 oder 2 ist, und

$R_1$ ein unsubstituiertes oder durch 1, 2 oder 3 Reste –Cl, –Br, –CN, $-NO_2$, $C_1$–$C_{12}$ Alkyl, $C_1$–$C_4$ Alkoxy, Phenyloxy, Tolyloxy, Phenylthio, Tolylthio, $C_1$–$C_8$ Alkylthio, $-SCH_2CH_2OH$, $C_1$–$C_4$ Alkylsulfonyl, Phenylsulfonyl, $C_2$–$C_4$ Alkoxycarbonyl, $C_1$–$C_4$ Alkylamino, $C_2$–$C_4$ Dialkylamino, Phenyl-CONH–, $C_1$–$C_4$ Alkyl-CONH– oder durch Benzoyl substituiertes Phenyl oder Naphthyl ist, oder $R_1$ ferner Anthryl, Phenanthryl, Thienyl, Pyridyl, Furyl, Indolyl oder Tetrahydronaphthyl ist, und

$R_2$ Wasserstoff, unsubstituiertes oder durch –OH, –Cl, $C_1$–$C_4$ Alkoxy, –CN, $C_2$–$C_5$ Alkoxycarbonyl, Phenyl, Chlorphenyl, $C_7$–$C_{10}$ Alkylphenyl oder $C_7$–$C_{10}$ Alkoxyphenyl substituiertes $C_1$–$C_{10}$ Alkyl, ferner Benzoyl bedeutet,

$R_3$ die gleiche Bedeutung wie $R_2$ hat und ferner unsubstituiertes oder durch –Cl, $C_1$–$C_4$ Alkyl, $C_1$–$C_4$ Alkoxy oder $C_1$–$C_4$ Alkylthio substituiertes Phenyl, $C_2$–$C_8$ Alkoxycarbonyl, –CN, $C_1$–$C_4$ Alkyl-NH–CO–, Phenyl-NH–CO– oder $-CONH_2$ bedeutet, oder $R_2$ und $R_3$ zusammen mit dem Kohlenstoffatom, an das sie gebunden sind, einen $C_4$–$C_6$ Cycloalkylring darstellen,

X –O–, –S–, $-SO_2-$, $-CH_2-$, $-C(CH_3)_2-$ oder $>N-COR_7$ bedeutet, wobei $R_7$ ein $C_1$–$C_4$ Alkyl oder Phenyl darstellt, und

Y eine direkte Bindung oder $-CH_2-$ bedeutet, und

$R_4$ wenn n = 1, $C_1$–$C_{18}$ Alkyl, unsubstituiertes oder durch Halogen, $C_1$–$C_{12}$ Alkyl, $C_1$–$C_4$ Alkoxy, $C_1$–$C_4$ Alkyl-CONH–, Phenyl-CONH–, $-NO_2$ oder Benzoyl substituiertes Phenyl, unsubstituiertes

oder durch Halogen, $C_1$–$C_{12}$ Alkyl oder $C_1$–$C_4$ Alkoxy substituiertes Naphthyl, $C_5$–$C_6$ Cycloalkyl, $C_7$–$C_9$ Aralkyl, 10-Campheryl, $-CF_3$, $-CCl_3$, –F oder $-NH_2$ bedeutet, und

$R_4$ wenn n = 2, eine $-(CH_2)_m$-Gruppe, wobei m die Zahl 2 bis 8 darstellt, oder unsubstituiertes oder durch $C_1$–$C_{12}$ Alkyl substituiertes Phenylen oder Naphthylen ist,

$R_5$ –H oder 1, 2 oder 3 Reste –Cl, –Br, $-NO_2$, $C_1$–$C_{12}$ Alkyl, $C_1$–$C_4$ Alkoxy, Phenoxy, Phenylthio, $C_1$–$C_8$ Alkylthio oder $-SCH_2CH_2OH$ bedeutet, und

$R_6$ Wasserstoff oder unsubstituiertes oder durch –OH, –Cl, $C_1$–$C_4$ Alkoxy, –CN, $C_2$–$C_5$ Alkoxycarbonyl, Phenyl, Chlorphenyl, $C_7$–$C_{10}$ Alkylphenyl oder $C_7$–$C_{10}$ Alkoxyphenyl substituiertes $C_1$–$C_8$ Alkyl, unsubstituiertes oder durch –Cl, $C_1$–$C_4$ Alkyl, $C_1$–$C_4$ Alkoxy oder $C_1$–$C_4$ Alkylthio substituiertes Phenyl, $C_2$–$C_8$ Alkoxycarbonyl oder –CN bedeutet.

Sind Phenyl oder Naphthyl als $R_1$ durch $C_1$–$C_{12}$ Alkyl substituiert, so handelt es sich um geradkettige oder verzweigte Substituenten, wie beispielsweise Methyl, Aethyl, n-Propyl, Isopropyl, n-Butyl, sec.-Butyl, tert.-Butyl, Pentyl, Hexyl, Heptyl, Octyl, Nonyl, Decyl, Undecyl oder Dodecyl, insbesondere aber Methyl. Sind Phenyl oder Naphthyl als $R_1$ durch $C_1$–$C_4$ Alkoxy substituiert, so handelt es sich beispielsweise um Methoxy, Aethoxy, Propoxy oder tert.-Butoxy.

Sind Phenyl oder Naphthyl als $R_1$ durch $C_1$–$C_8$ Alkylthio substituiert und stellt $R_5$ $C_1$–$C_8$ Alkylthio dar, so handelt es sich um geradkettige oder verzweigte Substituenten, wie beispielsweise Methyl-, Aethyl-, n-Propyl-, Isopropyl-, n-Butyl-, sec.-Butyl-, tert.-Butyl-, Pentyl-, Hexyl-, Heptyl- oder Octyl-, insbesondere aber um Methylthio.

Stellt $R_1$ ein durch $C_1$–$C_4$ Alkylamino resp. $C_2$–$C_4$ Dialkylamino substituiertes Phenyl oder Naphthyl dar, so handelt es sich beispielsweise um eine Methyl-, Aethyl-, Propyl- oder n-Butylamino resp. um eine Dimethyl- oder Diaethylamino Substitutionsgruppe.

Sind Phenyl, Naphthyl als $R_1$ durch $C_1$–$C_4$ Alkylsulfonyl substituiert, so handelt es sich dabei beispielsweise um Methyl-, Aethyl-, Propyl-, Butyl- oder tert.-Butylsulfonyl.

Sind Phenyl oder Naphthyl als $R_1$ durch $C_1$–$C_4$ Alkyl-CONH– substituiert, so handelt es sich beim Substituenten beispielsweise um Methyl-, Aethyl-, Propyl- oder n-Butyl-CONH–. Enthalten $R_3$ $C_1$–$C_4$ Alkyl-NHCO– und $R_4$ $C_1$–$C_4$ Alkyl-CONH–, so handelt es sich beispielsweise um Methyl-, Aethyl-, Propyl- oder n-Butyl-NHCO– bzw. –CONH-Substituenten.

Stellt $R_1$ Thienyl, Pyridyl, Furyl, Indolyl oder Tetrahydronaphthyl dar, so kommen alle Stellungsisomeren in Betracht. Bevorzugte Stellungsisomeren sind jedoch 2-Thenyl, 3-Pyridyl, 2-Furyl, 3-Indolyl oder 1,2,3,4-Tetrahydro-6-naphthyl.

Als $C_1$–$C_{10}$ Alkyl sind $R_2$ und $R_3$ geradkettige oder verzweigte Alkylgruppen, vorzugsweise aber geradkettige $C_1$–$C_4$ Alkylgruppen, wie beispielsweise Methyl, Aethyl, n-Propyl, n-Butyl. Als $C_1$–$C_8$ Alkyl ist $R_6$ geradkettiges oder verzweigtes Alkyl, vorzugsweise aber geradkettiges $C_1$–$C_4$ Alkyl wie z. B. Methyl, Aethyl, n-Propyl, n-Butyl. Sind $C_1$–$C_8$ Alkyl im $R_2$, $R_3$ und $R_6$ bzw. im Phenyl oder im Naphthyl als $R_4$ durch $C_1$–$C_4$ Alkoxy substituiert und stellt $R_5$ $C_1$–$C_4$ Alkoxy dar, so handelt es sich beispielsweise um Methoxy-, Aethoxy-, Propoxy- oder tert.-Butoxy-Substituenten.

Ist $C_1$–$C_8$ Alkyl als $R_2$, $R_3$ und $R_6$ durch $C_7$–$C_{10}$ Alkylphenyl oder $C_7$–$C_{10}$ Alkoxyphenyl substituiert, so handelt es sich beispielsweise um Methyl-, Methoxy-, Aethyl-, Aethoxy-, tert.-Butyl- oder tert.-Butoxyphenyl-Substituenten.

Ist Phenyl als $R_3$ und $R_6$ durch $C_1$–$C_4$ Alkylthio substituiert, so handelt es sich beispielsweise um Methyl-, Aethyl-, Propyl- oder tert.-Butylthio-Substituenten.

Bilden $R_2$ und $R_3$ zusammen mit dem C-Atom, an das sie gebunden sind, einen Cycloalkylring, so handelt es sich beispielsweise um einen Cyclopentan-, Cyclohexan- oder Cycloheptanring, insbesondere aber um einen Cyclohexanring.

Wenn n = 1:

Stellt $R_4$ $C_1$–$C_{18}$ Alkyl dar, so handelt es sich um geradkettige oder verzweigte Gruppen, wie beispielsweise Methyl, Aethyl, Propyl, Isopropyl, Butyl, tert.-Butyl, Pentyl, Hexyl, Heptyl, Octyl, Nonyl, Decyl, 2-Äthylhexyl, Undecyl, Dodecyl, tert.-Dodecyl, Tridecyl, Tetradecyl, Hexadecyl oder Octadecyl.

Ist Phenyl oder Naphthyl als $R_4$ durch $C_1$–$C_{12}$ Alkyl substituiert und stellt $R_5$ $C_1$–$C_{12}$ Alkyl dar, so handelt es sich um geradkettige oder verzweigte Alkylgruppen.

Stellt $R_4$ $C_5$–$C_6$ Cycloalkyl dar, so handelt es sich um Cyclopentyl und Cyclohexyl.

Stellt $R_4$ $C_7$–$C_9$ Aralkyl dar, so handelt es sich beispielsweise um 1-Phenyläthyl, 2-Phenyläthyl oder Benzyl.

Wenn n = 2:

Stellt $R_4$ eine $-(CH_2)_m$-Gruppe dar, so handelt es sich beispielsweise um Aethylen, Propylen, Butylen, Pentylen oder Hexamethylen.

Sind Phenylen oder Naphthylen durch $C_1$–$C_{12}$ Alkyl substituert, so handelt es sich dabei um geradkettige oder verzweigte Alkylgruppen.

Sind die verschiedenen Phenylgruppen in den Resten $R_1$, $R_3$, $R_4$ und $R_6$ durch andere Radikale als Wasserstoffatome substituiert, so erfolgt diese Substitution in ortho-, meta- oder para-Stellung, insbesondere aber in para-Stellung.

Bevorzugt sind Härtungskatalysatoren der Formel I, worin n die Zahl 1 oder 2 ist

$R_1$ ein unsubstituiertes oder durch –Cl, –Br, $C_1$–$C_8$ Alkyl, $C_1$–$C_4$ Alkoxy, Phenyloxy, Tolyloxy, Phenylthio, Tolylthio, $-SCH_2CH_2OH$, $C_1$–$C_8$ Alkylthio oder Benzoyl substituiertes Phenyl oder Naphthyl, ferner Anthryl oder Phenanthryl

$R_2$ Wasserstoff oder unsubstituiertes oder durch –OH, –Cl, –CN, $C_2$–$C_5$ Alkoxycarbonyl, Phenyl, Chlorphenyl, $C_7$–$C_{10}$ Alkylphenyl oder $C_7$–$C_{10}$ Alkoxyphenyl substituiertes $C_1$–$C_8$ Alkyl bedeuten, und

$R_3$ die gleiche obige Bedeutung wie $R_2$ hat, und ferner unsubstituiertes oder durch –Cl, $C_1$–$C_4$ Alkyl, $C_1$–$C_4$ Alkoxy oder $C_1$–$C_4$ Alkylthio substituier-

tes Phenyl, $C_2$–$C_4$ Alkoxycarbonyl oder –CN bedeutet, oder $R_2$ und $R_3$ zusammen mit dem Kohlenstoffatom, an das sie gebunden sind, einen $C_4$–$C_6$ Cycloalkylring bilden, und

$R_4$ wenn n = 1, $C_1$–$C_{18}$ Alkyl, unsubstituiertes oder durch –Cl, $C_1$–$C_{12}$ Alkyl oder $C_1$–$C_4$ Alkoxy substituiertes Phenyl, unsubstituiertes oder durch –Cl oder $C_1$–$C_{12}$ Alkyl substituiertes Naphthyl, oder $R_4$ ferner 10-Campheryl, $-CF_3$ oder –F bedeutet, und

$R_4$ wenn n = 2, eine $-(CH_2)_m$-Gruppe, Phenylen oder Naphthylen bedeutet, wobei m die Zahl 2, 3 oder 4 bedeutet.

Besonders bevorzugt sind Härtungskatalysatoren der Formel I, worin n = 1, und $R_1$ ein unsubstituiertes oder durch Chlor, Methyl, Methoxy, Methylthio, Phenylthio, $-SCH_2CH_2OH$ oder Benzoyl substituiertes Phenyl, $R_2$ Wasserstoff, $C_1$–$C_4$ Alkyl, $R_3$ Wasserstoff, $C_1$–$C_4$ Alkyl oder Phenyl, oder $R_2$ und $R_3$ zusammen mit dem Kohlenstoffatom, an das sie gebunden sind, einen Cyclohexanring bilden, und $R_4$ $C_1$–$C_{18}$ Alkyl, unsubstituiertes oder durch –Cl oder $C_1$–$C_{12}$ Alkyl substituiertes Phenyl oder Naphthyl, oder 10-Campheryl bedeuten.

Ganz besonders bevorzugt sind Härtungskatalysatoren der Formel I, worin n = 1, $R_1$ Phenyl, p-Tolyl oder p-Methylthiophenyl, $R_2$ Wasserstoff, $R_3$ Methyl, Isopropyl, n-Decyl oder Benzyl und $R_4$ Phenyl, p-Tolyl oder p–n-Dodecylphenyl bedeuten.

Ebenfalls besonders bevorzugt sind Härtungskatalysatoren der Formel II, worin n = 1, $R_5$ und $R_6$ Wasserstoff, X und Y eine $-CH_2$-Gruppe und $R_4$ $C_1$–$C_{18}$ Alkyl, unsubstituiertes oder durch $C_1$–$C_{12}$ Alkyl substituiertes Phenyl oder Naphthyl, oder 10-Campheryl bedeuten.

Beispiele für einzelne Verbindungen der Formel I sind:

2-[ (p-Tolylsulfonyl)oxy]-1-phenyl-1-propanon
2-[ (p-Tolylsulfonyl)oxy]-1-p-tolyl-1-propanon
2-[ (p-Chlorphenylsulfonyl)oxy]-1-phenyl-1-propanon
2-[ (p-Laurylphenylsulfonyl)oxy]-1-phenyl-1-propanon
2-[ (p-Methoxyphenylsulfonyl)oxy]-1-phenyl-1-propanon
2-[ (p-Methylthiophenylsulfonyl)oxy]-1-phenyl-1-propanon
2-[ (p-Acetamidophenylsulfonyl)oxy]-1-phenyl-1-propanon
2-[ (Methylsulfonyl)oxy]-1-phenyl-1-propanon
Benzoin-toluolsulfonat
Benzoin-methansulfonat
Benzoin-p-dodecylbenzolsulfonat
4,4′-Bismethylthiobenzoin-toluolsulfonat
2-[ (o-Nitrophenylsulfonyl)oxy]-1-phenyl-1-propanon
2-[ (Benzylsulfonyl)oxy]-1-phenyl-1-propanon
2-[ (n-Octylsulfonyl)oxy]-1-phenyl-1-propanon
2-[ (Cyclohexylsulfonyl)oxy]-1-phenyl-1-propanon
2-[ (Phenylsulfonyl)oxy]-1-phenyl-1-propanon
2-[ (β-Naphthylsulfonyl)oxy]-1-phenyl-1-propanon
2-[ (Trifluormethylsulfonyl)oxy]-1-phenyl-1-propanon
2-[ (Mesitylsulfonyl)oxy]-1-phenyl-1-propanon
2-[ (10′-Camphersulfonyl)oxy]-1-phenyl-1-propanon
1-Benzoyl-1-methylsulfonyloxy-cyclohexan
2-[ (p-Tolylsulfonyl)oxy]-1-(2′-thienyl)-1-propanon
2-[ (Methylsulfonyl)oxy]-1-(6′-tetralin)-1-propanon
2-[ (p-Tolylsulfonyl)oxy]-1-phenyl-1-octanon
2-[ (p-Tolylsulfonyl)oxy]-1-phenyl-1-dodecanon
2-[ (p-Tolylsulfonyl)oxy]-1-p-tolyl-1-dodecanon
2-[ (Methylsulfonyl)oxy]-4-äthoxycarbonyl-1-phenyl-1-butanon
2-[ (p-Tolylsulfonyl)oxy]-acetophenon
2-[ (p-Tolylsulfonyl)oxy]-2-methyl-1-phenyl-1-propanon
2-[ (10′-Camphersulfonyl)oxy]-acetophenon
2-[ (10′-Camphersulfonyl)oxy]-2-methyl-1-(p-methyl)phenyl-1-propanon
2-[ (10′-Champherylsulfonyl)oxy]-2-methyl-1-(p-methyltio)phenyl-1-propanon
2-[ (10′-Camphersulfonyl)oxy]-1-p(β-hydroxyäthylthio)phenyl-1-propanon
2-[ (10′-Camphersulfonyl)oxy]-1-(p-chlor)-phenyl-1-propanon
2-[ (p-Tolylsulfonyl)oxy]-1,3-bis-phenyl-1-propanon
2-[ (Methalsulfonyl)oxy]-1,3-bis-phenyl-1-propanon
2-[ (p-Tolylsulfonyl)oxy]-3-phenyl-1-p-tolyl-1-propanon
2-[ (p-Laurylphenylsulfonyl)oxy]-1,3-bis-phenyl-1-propanon
2-[ (p-Tolylsulfonyl)oxy]-2-methoxymethyl-1-phenyl-1-propanon
2-[ (Methylsulfonyl)oxy]-2-chlormethyl-1-phenyl-1-propanon
2-[ (p-Tolylsulfonyl)oxy]-p-methylthio-acetophenon
2-[ (Methylsulfonyl)oxy]-1-(p-methylthio)phenyl-1-propanon
2-[ (p-Tolylsulfonyl)oxy]-1-(p-methylthio)-phenyl-1-propanon
2-[ (p-Laurylphenylsulfonyl)oxy]-1-(p-methylthio)-phenyl-1-propanon
2-[ (p-Tolylsulfonyl)oxy]-3-phenyl-1-(p-methylthio)phenyl-1-propanon
2-[ (p-Tolylsulfonyl)oxy]-1-(p-phenylthio)phenyl-1-propanon
2-[ (p-Tolylsulfonyl)oxy]-1-(p-acetamido)phenyl-1-propanon
2-[ (p-Laurylphenylsulfonyl)oxy]-3-methyl-1-p-methylthiophenyl-1-butanon
2-[ (p-Tolylsulfonyl)oxy]-3-methyl-1-phenyl-1-butanon
2-[ (p-Tolylsulfonyl)oxy]-3-methyl-1-p-tolyl-1-butanon
2-[ (p-Tolylsulfonyl)oxy]-1-β-naphthyl-1-propanon
2-[ (p-Tolylsulfonyl)oxy]-2-äthoxycarbonyl-acetophenon
2-[ (p-Tolylsulfonyl)oxy]-2-benzoyl-malonsäure-diäthylester
Phthalsäureanhydrid-5-sulfonsäure-(1′-benzoyl)-äthylester
Phthalsäure-N-methylimid-5-sulfonsäure-(1′-methyl-1′-benzoyl)-äthylester

Naphthalin-2,6-disulfonsäure-bis-(1′-benzoyl)-äthylester

Dinonylnaphthalindisulfonsäure-bis-(1′-benzoyl-1′-methyl)-äthylester.

Beispiele für einzelne Verbindungen der Formel II sind:

2-[(Methylsulfonyl)oxy]-2-methyltetralon-(1)
2-[(Methylsulfonyl)oxy]-tetralon-(1)
2-[(p-Tolylsulfonyl)oxy]-tetralon-(1)
2-[(p-Laurylphenylsulfonyl)oxy]-tetralon-(1)
3-[(p-Tolylsulfonyl)oxy]-1-thiochromanon-(4)
3-[(10′-Campherylsulfonyl)oxy]-1-thiochromanon-(4)-S-dioxid
2-[(Methylsulfonyl)oxy]-cumaranon-(3)
2-[(Phenylsulfonyl)oxy]-indanon-(1).

Viele Verbindungen der Formel I sind bekannt und können nach bekannten Verfahren hergestellt werden, beispielsweise durch Umsetzung der entsprechenden Hydroxyverbindungen der Formel III

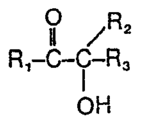 III

mit einem bzw. einem halben Äquivalent der entsprechenden Mono- bzw. Di-Sulfonsäurechloride der Formel IV

$R_4(SO_2Cl)_n$ IV

in Gegenwart einer Base [siehe diesbezüglich Journal of the Chemical Society Perkin I, 1981, S. 263 oder Journal of Org. Chem. 34, 1595 (1969)], oder durch Umsetzung der entsprechenden Bromderivate der Formel V

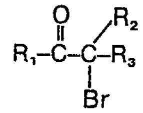 V

mit einem bzw. einem halben Äquivalent der Silbersalze der entsprechenden Mono- bzw. Di-Sulfonsäurederivate der Formel VI

$(AgO_3S)_nR_4$ VI,

wie beispielsweise nach dem angegebenen Verfahren in Journal of Organic Chemistry of the USSR, Band 8, S. 2166, (1972), oder aber für eine bestimmte Klasse dieser Verbindungen durch direkte Umsetzung eines Acetophenons der Formel VII mit dem Iodoniumsalz der Formel VIII zum entsprechenden Produkt der Formel IX

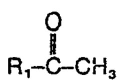 , 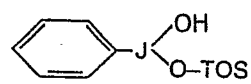 , 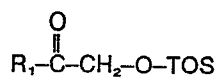 ,

VII VIII IX

(TOS = Tosyl)

wie beispielsweise nach dem angegebenen Verfahren in Journal of Org. Chem., 47, 2487 (1982).

In den Formeln III, IV, V und VI, VII und IX haben die Reste $R_1$ bis $R_4$ und n die oben angegebene Bedeutung.

Andere Verbindungen der Formel I, sowie die Verbindungen der Formel II sind neu und stellen daher auch einen Gegenstand der vorliegenden Erfindung dar. Die Herstellung erfolgt in Analogie zu den bekannten Verbindungen.

Die neuen Verbindungen der Formel I entsprechen der Formel X

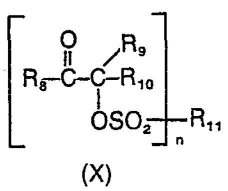 ,

(X)

worin

n die Zahl 1 oder 2 ist, und

$R_8$ ein durch $C_2$–$C_{12}$ Alkyl, $C_2$–$C_4$ Alkoxy, Phenyloxy, Tolyloxy, Phenylthio, Tolylthio, $C_1$–$C_8$ Alkylthio, $-SCH_2-CH_2OH$, $C_1$–$C_4$ Alkylsulfonyl, Phenylsulfonyl, $C_1$–$C_4$ Alkylamino, $C_2$–$C_4$ Dialkylamino, Phenyl-CONH–, $C_1$–$C_4$ Alkyl-CONH- oder durch Benzoyl substituiertes Phenyl- oder Naphthyl ist, oder $R_8$ ferner Anthryl, Phenanthryl, Thienyl, Pyridyl, Furyl, Indolyl oder Tetrahydronaphthyl ist,

$R_9$ $C_2$–$C_8$ Alkyl oder durch –OH, –Cl, $C_1$–$C_4$ Alkoxy, –CN, $C_2$–$C_5$ Alkoxycarbonyl, Phenyl, Chlorphenyl, $C_7$–$C_{10}$ Alkylphenyl oder $C_7$–$C_{10}$ Alkoxyphenyl substituiertes $C_1$–$C_8$ Alkyl bedeutet,

$R_{10}$ die gleiche Bedeutung wie $R_9$ hat, und ferner durch –Cl, $C_1$–$C_4$ Alkyl, $C_1$–$C_4$ Alkoxy oder $C_1$–$C_4$ Alkylthio substituiertes Phenyl, $C_4$–$C_8$ Alkoxycarbonyl, –CN, $C_1$–$C_4$ Alkyl-NHCO-, Phenyl-NHCO- oder $-CONH_2$ bedeutet, oder $R_9$ und $R_{10}$ zusammen mit dem Kohlenstoffatom, an das sie gebunden sind, einen $C_4$–$C_6$ Cycloalkylring bilden, und

$R_{11}$ wenn n = 1, $C_2$–$C_{18}$ Alkyl, durch $C_2$–$C_{12}$ Alkyl, $C_2$–$C_4$ Alkoxy, $C_1$–$C_4$ Alkyl-CONH-, Phenyl-CONH- oder Benzoyl substituiertes Phenyl, unsubstituiertes oder durch Halogen, $C_1$–$C_{12}$ Alkyl oder $C_1$–$C_4$ Alkoxy substituiertes Naphthyl, $C_5$–$C_6$ Cycloalkyl, $C_7$–$C_9$ Aralkyl, 10-Campheryl, $-CF_3$, $-CCl_3$, –F oder $-NH_2$ bedeutet, und

$R_{11}$ wenn n = 2, eine $-(CH_2)_m$-Gruppe, wobei m die Zahl 2 bis 8 darstellt, oder unsubstituiertes oder durch $C_1$–$C_{12}$ Alkyl substituiertes Phenylen oder Naphthylen ist.

Viele Zwischenprodukte der Formel III, IV, V, VI und VII stellen bekannte Verbindungen dar, die nach bekannten Verfahren hergestellt werden können, wie beispielsweise nach denjenigen, die in Houben-Weyl, Methoden der organischen Chemie, beschrieben sind: Band V/4, S. 171–189, für die Verbindungen der Formel V, Band IX, S. 411

bzw. 563, für die Verbindungen der Formel IV, und für die Verbindungen der Formel III, die Literaturstellen A. 526, 143, 164 (1936), Am. Soc. 76, 4402 (1954) oder Z. obsc. Chim. 34, 3165 (1964).

Die erfindungsgemässen Härtungskatalysatoren werden den Harzen in einer für die Härtung ausreichenden Menge zugesetzt. Die benötigte Menge hängt nicht nur von der Art des Harzes sondern auch von der beabsichtigten Härtungstemperatur und Härtungszeit ab. Im allgemeinen verwendet man 0,1 bis 10 Gew.-%, vorzugsweise 0,5 bis 5 Gew.-%, bezogen auf das lösungsmittelfreie Harz. Mischungen der erfindungsgemässen Härtungskatalysatoren können auch eingesetzt werden.

Als säurehärtbare Harze kommen alle Harze in Frage, deren Härtung durch saure Katalysatoren beschleunigt werden kann. Das sind vor allem Lacke auf Basis von Acryl-, Polyester-, Alkyd-, Melamin-, Harnstoff- und Phenolharzen, insbesondere aber die Mischungen von Acryl-, Polyester- oder Alkydharzen untereinander oder mit einem Melaminharz. Darunter fallen auch modifizierte Lackharze wie z.B. acrylmodifizierte Polyester- oder Alkydharze. Beispiele für einzelne Typen von Harzen, die unter den Begriff Acryl-, Polyester- und Alkydharze fallen, sind z.B. in Wagner, Sarx/Lackkunstharze (München, 1971) Seiten 86 bis 123 und 229 bis 238, oder in Ullmann(Encyclopädie der techn. Chemie, 4. Auflage, Band 15 (1978), Seiten 613 bis 628, beschrieben. Von besonderer Bedeutung ist die saure Katalyse für die Härtung von Lacken, die verätherte Aminoharze enthalten, wie z.B. methylierte oder butylierte Melaminharze (N-Methoxymethyl- bzw. N-Butoxymethylmelamin oder methylierte/butylierte Glycolurile u.s.w.),

Z.B.: 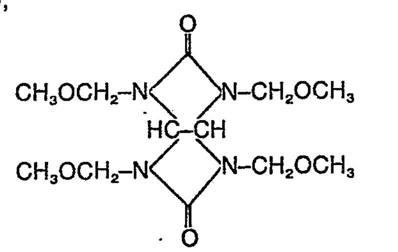

Weitere Harzzusammensetzungen sind Gemische von polyfunktionellen Alkoholen, oder Hydroxylgruppen enthaltenden Aryl- und Polyesterharzen, oder partiell verseiftem Polyvinylacetat oder Polyvinylalkohol mit polyfunktionellen Dihydropyranyläthern, wie beispielsweise Derivate der 3,4-Dihydro-2H-pyran-2-carbonsäure.

Für bestimmte Zwecke verwendet man auch Harzzusammensetzungen, die monomere oder oligomere Bestandteile mit polymerisationsfähigen ungesättigten Gruppen haben. Auch solche Harzzusammensetzungen sind nach dem erfindungsgemässen Verfahren härtbar. Hierbei können zusätzlich radikalische Polymerisationsinitiatoren oder Photoinitiatoren beispielsweise aus der Klasse der aromatischen Ketone, Benzoinverbindungen, Benzylketale, α-Hydroxyacetophenonderivate oder die Verbindungen der Formel I oder II mitverwendet werden. Erstere initiieren die Polymerisation der ungesättigten Gruppen während der Wärmebehandlung, letztere während der UV-Bestrahlung. In gewissen Fällen können auch H-Donatoren beigesetzt werden. Man kann solche Harzzusammensetzungen mit ungesättigten Komponenten auch durch Elektronenstrahlen polymerisieren. Zusätzlich zur Polymerisation der ungesättigten Komponenten muss aber stets eine sauer katalysierte Vernetzung (eventuell beim Einbrennen) erfolgen.

Die Lacke können Lösungen oder Dispersionen des Lackharzes in einem organischen Lösungsmittel oder in Wasser sein, sie können aber auch lösungsmittelfrei sein. Von besonderem Interesse sind Lacke mit geringem Lösungsmittelanteil, sogenannte «high solids-Lacke». Die Lacke können Klarlacke sein, wie sie z.B. in der Automobilindustrie als Decklage von Mehrschichten-Anstrichen verwendet werden. Sie können auch Pigmente enthalten, seien es anorganische oder organische Pigmente, sowie Metallpulver für Metalleffekt-Lacke.

Die folgenden erfindungsgemässen Zusammensetzungen stellen weitere spezielle Vorzugsformen der Erfindung dar:

a) Zusammensetzung, welche als säurehärtbares Harz ein Aminoharz oder ein Gemisch eines Aminoharzes mit einem anderen säurehärtbaren Harz ist.

b) Zusammensetzung, welche als säurehärtbares Harz ein Phenolharz oder ein Gemisch eines solchen Harzes mit einem anderen säurehärtbaren Harz enthält.

c) Zusammensetzung, welche als Harz ein Gemisch aus mindestens einer polymerisierbaren Verbindung mit einer oder mehreren polymerisierbaren, äthylenisch ungesättigten Bindungen, und mindestens einem Aminoplast, wie ein Melamin- oder ein Harnstoffaldehydharz, und zusätzlich radikalische Polymerisationsinitiatoren und gegebenenfalls Photoinitiatoren enthält.

Beispiele für polymierisierbare Verbindungen mit einer oder mehreren polymerisierbaren, äthylenisch ungesättigten Bindungen sind Ester der Acryl- und Methacrylsäure, Hydroxyäthylester der Acryl- und Methacrylsäure, Di- und Polyacrylate sowie Di- und Polymethacrylate von Glykolen und Polyolen, aromatische Vinyl- und Divinylderivate, N-Methylolderivate des Acrylamids oder Methacrylamids, Vinylalkyläther, Trimethylolpropandiallyläthermono-(meth)-acrylate, Reaktionsprodukte von Glycidyl(meth)acrylat und Mono- oder Dicarbonsäuren, Polyesterharze aus α-β-ungesättigten Dicarbonsäuren oder deren Anhydriden und Diolen, Urethanacrylate oder Polyepoxypolyacrylate.

Bevorzugt sind dabei Zusammensetzungen aus

A) 80–99 Gew.-% einer polymerisierbaren Verbindung mit einer oder mehreren äthylenisch ungesättigten Bindungen,

B) 1 bis 20 Gew.-% mindestens eines Aminoplastes, wie Melamin- oder Harnstoff-Formaldehydharz, und

C) 0,1 bis 10 Gew.%, bezogen auf die Summe

aus A und B, eines Härtungskatalysators der Formel I.

Die Lacke können weiterhin kleinere Mengen an speziellen Zusätzen enthalten, wie sie in der Lacktechnologie üblich sind, beispielsweise Verlaufshilfsmittel, Thixotropiemittel, Lichtschutzmittel, Antioxydantien oder Photoinitiatoren.

Beispiele für Lichtschutzmittel sind solche aus der Klasse der Hydroxyphenyl-benztriazole, Hydroxybenzophenone, Cyanacrylate, Hydroxyphenyltriazine, Oxalanilide, organischen Nickelverbindungen oder der Polyalkylpiperidinderivate. Da Lichtschutzmittel vom UV-Absorber-Typ die erfindungsgemässe UV-Bestrahlung stören können, kann man solche Lichtschutzmittel auch einer angrenzenden Lackschicht zusetzen, aus der sie dann allmählich in die zu schützende Schicht des Einbrennlackes eindiffundieren. Die angrenzende Lackschicht kann eine Grundierung unter dem Einbrennlack oder ein Decklack über dem Einbrennlack sein.

Eine weitere Möglichkeit den störenden Einfluss von UV-Absorber zu umgehen besteht in der Verwendung von sogenannten «geblockten UV-Absorbern» wie sie z.B. in der DE-OS 2 648 367 beschrieben sind. Ebenfalls geeignet sind Produkte, die unter Photo-Fries-Umlagerung UV-Absorber bilden wie z.B. Resorcinmonobenzoat oder gewisse Salicylsäureester.

Bevorzugt werden Polymethylpiperidinderivate bzw. Kombinationen derselben mit UV-Absorbern verwendet.

Die Erfindung betrifft weiterhin ein Verfahren zur Härtung von säurehärtbaren Harzen in Gegenwart von Härtungskatalysatoren der Formel I oder II durch Bestrahlen mit kurzwelligem Licht und anschliessendes Erwärmen.

Die Bestrahlung des Harzes mit kurzwelligem Licht geschieht vorzugsweise mit UV-Licht, wofür es heute eine Anzahl geeigneter technischer Geräte gibt. Diese enthalten Quecksilber-mitteldruck-, -hochdruck- oder -niederdrucklampen sowie Leuchtstoffröhren, deren Emissionsmaxima bei 250 bis 400 nm liegen. Die nötigen Bestrahlungszeiten hängen von der Schichtdicke des Harzes, von der Pigmentierung, von der Lichtstärke der Lampen und von der Distanz der Lampen ab. Ein unpigmentierter Lack in üblicher Schichtdicke benötigt in üblichen UV-Bestrahlungsgeräten einige Sekunden Belichtungszeit. In dieser Zeit hat sich der latente Katalysator unter Bildung von freier Sulfonsäure photochemisch umgewandelt.

Setzt man dem Harz Photosensibilisatoren zu, so kann man die Bestrahlung auch mit Tageslichtlampen durchführen. Beispiele für bekannte Photosensibilisatoren sind kondensierte Aromaten wie z.B. Perylen, aromatische Amine (wie sie z.B. im US-Patent 4 069 054 beschrieben sind) oder kationische und basische Farbstoffe (wie sie z.B. im US-Patent 4 026 705 beschrieben sind).

Da die Säurehärtung bei Raumtemperatur sehr langsam abläuft, ist es für eine technische Ausübung des Verfahrens nötig, an die Bestrahlung eine Temperaturbehandlung anzuschliessen. Diese kann jedoch im Unterschied zu anderen Verfahren mit wärmespaltbaren Härtungskatalysatoren bei relativ niedrigen Temperaturen durchgeführt werden. Bei einer Einbrenndauer von etwa 30 Minuten und Verwendung von etwa 2% Katalysator genügen Einbrenntemperaturen von etwa 70 bis 80 °C. Bei Verwendung von 1% Katalysator benötigt man Temperaturen von etwa 80 bis 100 °C und bei Verwendung von 0,5% Katalysator etwa 100 bis 120 °C. Vorzugsweise härtet man die erfindungsgemäss katalysierten Harze nach der Bestrahlung bei Temperaturen unterhalb 130 °C. Demgegenüber benötigt man für die Härtung mit bekannten Aminsalzen von Sulfonsäuren (ohne Bestrahlung) Einbrenntemperaturen von über 130 °C.

Diese relativ niedrigen Einbrenntemperaturen des erfindungsgemässen Verfahrens sind von erheblicher technischer Bedeutung bei der Beschichtung oder Lackierung von temperaturempfindlichen Substraten. Beispiel hierfür sind Gegenstände aus Holz oder Karton, insbesondere aber Gegenstände, die Teile aus Kunststoffen oder Kautschuken enthalten, beispielsweise elektrische Geräte, Fahrzeuge aller Art oder Maschinen.

Ein weiterer Vorteil gegenüber anderen Einkomponenten-Harzen, die einen Härtungskatalysator enthalten, ist, dass die erfindungsgemässen Einkomponentensysteme bei Raumtemperatur praktisch unbegrenzt lagerfähig sind, da sich der wirksame Katalysator erst bei der Bestrahlung bildet.

Das erfindungsgemässe Verfahren ist für alle Arten der industriellen Beschichtung und Lackierung geeignet, wie z.B. für die Lackierung von Maschinen, Fahrzeugen, Schiffen oder Konstruktionsteilen. Von besonderer Bedeutung ist es für die Automobil-Lackierung. Hierbei kann es sowohl in Einschicht-Lackierung wie Mehrschicht-Lackierung angewendet werden. Von besonderem Interesse ist auch die Anwendung des Verfahrens für die kontinuierliche Beschichtung von Blechen, beispielsweise Stahl- oder Aluminiumblechen, nach dem sogenannten Coil-Coat-Verfahren. Das Verfahren eignet sich zudem für die Härtung von säurehärtbaren Druckfarben, die sich wegen ihrer hervorragenden Aufziehfähigkeit besonders für den Blechdruck eignen.

Bei der Anwendung des erfindungsgemässen Verfahrens auf Pressmassen, Giess- und Laminierharzen können die Harze zuerst in dünner Schicht bestrahlt und anschliessend zu beliebigen Gegenständen heiss verformt und gehärtet werden. Soweit es sich jedoch um Gegenstände von relativ niedriger Dicke handelt, können die Harze auch zuerst verformt und anschliessend bestrahlt und erwärmt werden. Die Schichtdicke kann bei der Bestrahlung der Harze, je nach deren Transparenz mehrere Millimeter betragen. Eine weitere Anwendungsmöglichkeit findet das Verfahren bei der Herstellung von Relief-Formen, wie z.B. Druckplatten. Hierbei erfolgt zunächst eine Belichtung der festen oder flüssigen säurehärtbaren Harzzusammensetzung, die auch ungesättigte Momomere/Präpolymere enthalten kann, durch

einen Negativfilm. Anschliessend erfolgt gegebenenfalls eine thermische Nachbehandlung, wobei die belichteten Stellen vernetzt werden. Zum Schluss wird die Druckplatte durch Auswaschen der unvernetzten Teile entwickelt. Die folgenden Beispiele erläutern das Verfahren anhand spezifischer erfindungsgemässer Zusammensetzungen näher. Hierin bedeuten Teile Gewichtsteile und % Gewichtsprozente.

Beispiel 1:
Härtung eines Lackes auf Basis von Acryl-Melamin-Harz.

Aluminiumbleche von 0,5 mm Dicke, die mit einem weisspigmentierten Grundlack auf Basis Polyesterharz beschichtet sind, werden mit einem festkörperreichen Klarlack der folgenden Zusammensetzung beschichtet:

53,7 Teile Acrylharz (Paraloid® OL 42, Rohm & Haas Co., USA)
19,2 Teile Melaminharz (Cymel® 301, Amer. Cyanamide Co.)
1,9 Teile Celluloseacetobutyrat (CAB® 551001, Eastman Chem. Co.)
10,5 Teile n-Butanol
10,1 Teile Butylacetat
2,9 Teile Verlaufshilfsmittel (Byketol® Spezial, Byk-Mallinckrodt)
0,3 Teile Verlaufshilfsmittel (Modaflow®, Monsanto Comp.)
0,63 Teile Härtungskatalysator.
[Bindemittelanteil, als Festkörper: 19,2 Teile Melaminharz + 42,96 Teile Acrylharze = 62,16 Teile]

Der Katalysator wird in einem Teil des Butanols vorgelöst. Der Lack hat einen Gehalt von 62,16 Teilen Festkörper (Bindemittel). Die Katalysatormenge entspricht daher 1%, bezogen auf lösungsmittelfreies Bindemittel.

Der Lack wird mit einem elektrischen Filmziehgerät so aufgetragen, dass die Trockenfilmstärke etwa 30 µm beträgt. Nach einer Abluftzeit von 15 Minuten werden die Proben in einem PPG-Bestrahlungsgerät mit 2 Hochdruckquecksilberdampflampen à 80 Watt einer UV-Bestrahlung unter Variation der Bestrahlungszeit ausgesetzt. Anschliessend werden die Proben in einem Lackofen 30 Minuten bei 100 °C eingebrannt.

Zur Beurteilung des Härtungsgrades wird die Pendelhärte des Lackfilmes nach der Methode von König (DIN 53 157) bestimmt, und zwar 30 Minuten und 24 Stunden nach dem Einbrennen.

Zur Beurteilung der Verfärbung (Vergilbung) wird der Farbtonabstand ΔE gemäss DIN 6174 bestimmt.

Die Resultate sind in Tabelle 1 aufgeführt.

Tabelle 1

| Katalysator | Bestrahlungszeit (Sek.) | Pendelhärte (Sek.) nach 30 Min. | 24 Std. | Farbtonabstand ΔE |
|---|---|---|---|---|
| 1-Benzoyl-1-(methylsulfonyl) oxy-cyclohexan | 2,1 | 83 | 81 | 1,6 |
| | 4,2 | 99 | 102 | 2,0 |
| | 12,6 | 108 | 115 | 2,9 |

Ausserdem wird die Lagerstabilität der Lackproben durch Messung der Viskosität mit dem ICI Kegel-Platte-Viskosimeter (DIN 53 229) während 7-tägiger Lagerung bei 60 °C überprüft.

Bei dieser Methode wird die Viskosität in Poise gemessen. In Tabelle 2 ist die Differenz (Δη) der so gemessenen Viskosität zur Viskosität einer katalysatorfreien Lackprobe angegeben.

Tabelle 2

| Katalysator | Viskositätsdifferenz Δη in Poise nach 0 | 1 | 2 | 3 | 4 | 7 Tagen Lagerung 60°C |
|---|---|---|---|---|---|---|
| 1-Benzoyl-1-(methylsulfonyl)oxy-cyclohexan | 0,1 | 0,3 | 0,3 | 0,5 | 0,3 | 0,5 |

Beispiel 2:
Es wird die folgende Grundharzformulierung zugrunde gelegt:

| | | Festkörper |
|---|---|---|
| Hexamethoxamethylmelamin (Cymel® 301, 100%) | 17,93 g | 17,93 Teile |
| Butylacetat | 9,73 g | |
| Celluloseacetobutyrat (CAB® 551001 der Firma Eastman Chem.) | 1,83 g | |
| Silikonharz in organischem Lösungsmittel (Verlaufshilfsmittel Byketol® Spezial der Firma ByK-Mallinckrodt) | 2,80 g | |
| Verlaufshilfsmittel auf Polymer-Basis (Medaflow®, 1%ige Lsg.; Monsanto) | 0,29 g | |
| Hydroxylfunktionelles Acrylharz (Paraloid® AT 10, 73 Gew.%; Rohm + Haas) | 57,30 g | 41,83 Teile |
| n-Butanol | 10,12 g | |
| | 100,00 g | 59,76 Teile |

Die in Tabelle 3 angeführten Verbindungen werden in Konzentration von 1 Gew.-% (bezogen auf lösungsmittelfreies Bindemittel = 59,76 Teile) in diese Harzformulierung eingearbeitet. Die Prüfung erfolgt wie in Beispiel 1 beschrieben. Die Ergebnisse sind in Tabelle 3 dargestellt. Dabei wird die Lagerstabilität der Lackproben bei 60 °C durch Messung der Viskosität angegeben (Messung erfolgt bei 20°, Angabe in Poise).

Tabelle 3

| Katalysator | Belichtungszeit in Sek. | Pendelhärte in Sek. nach 30 Min. | 24 Std. | Farbtonabstand ΔE | Lägerstabilität nach Tagen bei 60°C in Poise bei 20°C 0 | 1 | 2 | 3 | 4 | 7 |
|---|---|---|---|---|---|---|---|---|---|---|
| 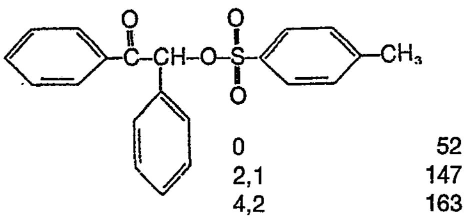 | 0 | 52 | 63 | 0,2 | 3,1 | 4,0 | 5,2 | 6,8 | 8,0 | 11,2 |
| | 2,1 | 147 | 168 | 0,5 | | | | | | |
| | 4,2 | 163 | 181 | 0,7 | | | | | | |
| | 8,4 | 171 | 191 | 1,3 | | | | | | |
| | 12,6 | 172 | 192 | 1,8 | | | | | | |
| 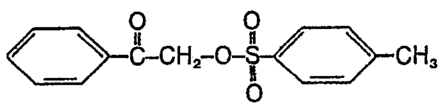 | 0 | 18 | 17 | 0,6 | 3,0 | 3,4 | 4,1 | 4,7 | 5,6 | 8,8 |
| | 2,1 | 148 | 154 | 0,5 | | | | | | |
| | 4,2 | 174 | 187 | 0,5 | | | | | | |
| | 8,4 | 183 | 196 | 0,8 | | | | | | |
| | 12,6 | 183 | 196 | 1,1 | | | | | | |

Beispiel 3:

Weitere Lackfilme wurden gemäss Beispiel 2 hergestellt, ihre Pendelhärte gemäss DIN 53 157 zur Beurteilung des Härtungsgrades und der Farbtonabstand ΔE gemäss DIN 6174 zur Beurteilung der Verfärbung/Vergilbung bestimmt. Die Resultate sind in Tabelle 4 aufgeführt.

Tabelle 4

| Katalysator | Bestrahlungszeit (Sek.) | Pendelhärte in Sek. nach 30 Min. | 24 Std. | Farbtonabstand ΔE |
|---|---|---|---|---|
| 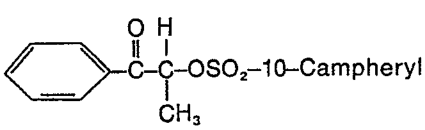 | 0 | 19 | 21 | 0,5 |
| | 2,1 | 128 | 136 | 0,2 |
| | 4,2 | 166 | 181 | 0,2 |
| | 8,4 | 179 | 195 | 0,1 |
| | 12,6 | 179 | 195 | 0,3 |
| 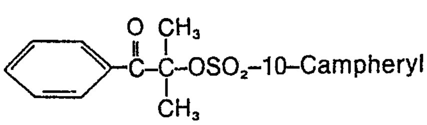 | 0 | 22 | 27 | 0,5 |
| | 2,1 | 132 | 143 | 0,1 |
| | 4,2 | 168 | 183 | 0,2 |
| | 8,4 | 179 | 194 | 0,4 |
| | 12,6 | 182 | 197 | 0,7 |
| 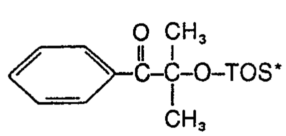 | 0 | 39 | 42 | 0,4 |
| | 2,1 | 179 | 191 | 0,2 |
| | 4,2 | 189 | 197 | 0,1 |
| | 8,4 | 188 | 202 | 0,1 |
| | 12,6 | 179 | 201 | 0,4 |
| 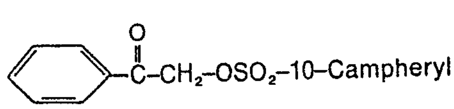 | 0 | 25 | 29 | 0,2 |
| | 2,1 | 127 | 137 | 0,2 |
| | 4,2 | 167 | 182 | 0,1 |
| | 8,4 | 182 | 199 | 0,2 |
| | 12,6 | 185 | 203 | 0,5 |

Tabelle 4 (Fortsetzung)

| Katalysator | Bestrahlungszeit (Sek.) | Pendelhärte in Sek. nach 30 Min. | 24 Std. | Farbtonabstand ΔE |
|---|---|---|---|---|
| 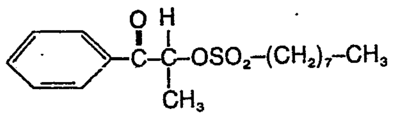 | 0 | 7 | 8 | 0,3 |
| | 2,1 | 106 | 117 | 0,1 |
| | 4,2 | 151 | 169 | 0,5 |
| | 8,4 | 169 | 189 | 0,6 |
| | 12,6 | 171 | 191 | 0,8 |
| 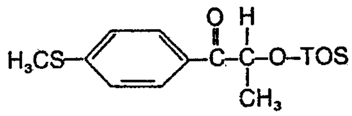 | 0 | 8 | 10 | 0,3 |
| | 2,1 | 175 | 191 | 0,3 |
| | 4,2 | 176 | 193 | 0,6 |
| | 8,4 | 179 | 197 | 1,3 |
| | 12,6 | 177 | 198 | 1,6 |
| 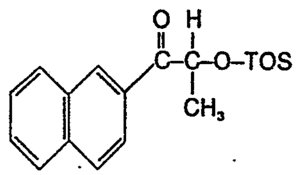 | 0 | 11 | 11 | 0,2 |
| | 2,1 | 69 | 73 | 0,2 |
| | 4,2 | 99 | 104 | 0,3 |
| | 8,4 | 136 | 148 | 0,9 |
| | 12,6 | 154 | 174 | 1,2 |
| 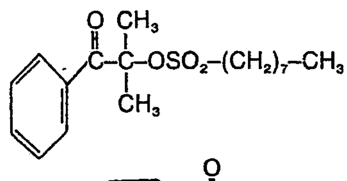 | 0 | 31 | 34 | 0,2 |
| | 2,1 | 136 | 145 | 0,4 |
| | 4,2 | 164 | 181 | 0,4 |
| | 8,4 | 177 | 193 | 0,6 |
| | 12,6 | 177 | 198 | 0,9 |
| 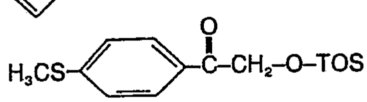 | 0 | 11 | 15 | 0,3 |
| | 2,1 | 174 | 191 | 0,6 |
| | 4,2 | 179 | 197 | 0,8 |
| | 8,4 | 182 | 196 | 1,3 |
| | 12,6 | 183 | 198 | 1,8 |
| 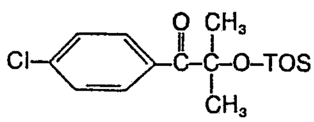 | 0 | 21 | 24 | 0,1 |
| | 2,1 | 143 | 155 | 0,3 |
| | 4,2 | 165 | 181 | 0,5 |
| | 8,4 | 175 | 190 | 0,5 |
| | 12,6 | 176 | 192 | 0,9 |
| 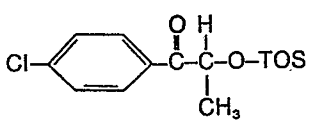 | 0 | 8 | 11 | 0,3 |
| | 2,1 | 123 | 128 | 0,2 |
| | 4,2 | 164 | 178 | 0,4 |
| | 8,4 | 182 | 195 | 0,7 |
| | 12,6 | 183 | 194 | 1,0 |
| 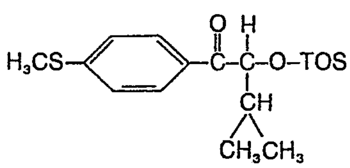 | 0 | 7 | 8 | 0,3 |
| | 2,1 | 165 | 183 | 0,3 |
| | 4,2 | 171 | 189 | 0,5 |
| | 8,4 | 178 | 192 | 1,0 |
| | 12,6 | 178 | 189 | 1,4 |
| 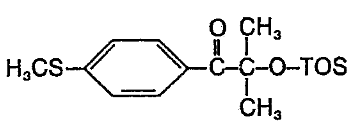 | 0 | 26 | 22 | 0,6 |
| | 2,1 | 182 | 187 | 0,5 |
| | 4,2 | 183 | 192 | 0,6 |
| | 8,4 | 183 | 197 | 0,8 |
| | 12,6 | 184 | 194 | – |
| 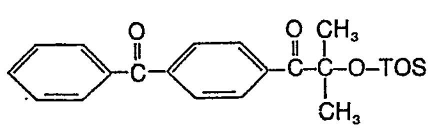 | 0 | 15 | 15 | 0,3 |
| | 2,1 | 138 | 140 | 0,4 |
| | 4,2 | 171 | 183 | 0,6 |
| | 8,4 | 181 | 196 | 1,1 |
| | 12,6 | 183 | 196 | 1,5 |
| 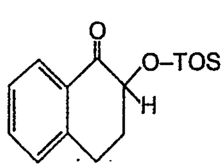 | 0 | 14 | 13 | 0,4 |
| | 2,1 | 166 | 178 | 0,4 |
| | 4,2 | 181 | 193 | 0,5 |
| | 8,4 | 185 | 196 | 0,9 |
| | 12,6 | 184 | 195 | 1,4 |

Tabelle 4 (Fortsetzung)

| Katalysator | Bestrahlungszeit (Sek.) | Pendelhärte in Sek. nach 30 Min. | 24 Std. | Farbtonabstand ΔE |
|---|---|---|---|---|
| 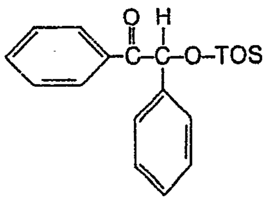 | 0 | 46 | 49 | 0,2 |
| | 2,1 | 173 | 180 | 0,3 |
| | 4,2 | 184 | 194 | 0,4 |
| | 8,4 | 187 | 188 | 0,8 |
| | 12,6 | 186 | 197 | 1,0 |
| 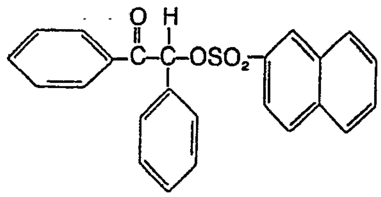 | 0 | 41 | 39 | 0,1 |
| | 2,1 | 68 | 64 | 0,1 |
| | 4,2 | 99 | 102 | 0,3 |
| | 8,4 | 150 | 151 | 0,7 |
| | 12,6 | 168 | 178 | 0,9 |
| 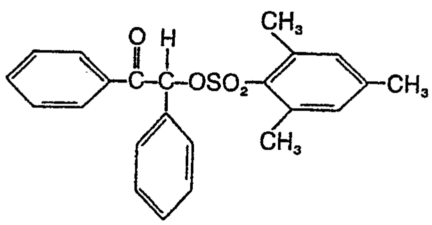 | 0 | 17 | 17 | 0,3 |
| | 2,1 | 146 | 153 | 0,4 |
| | 4,2 | 174 | 187 | 0,6 |
| | 8,4 | 183 | 194 | 0,8 |
| | 12,6 | 183 | 196 | 1,1 |
| 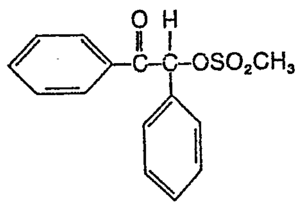 | 0 | 8 | 8 | 0,6 |
| | 2,1 | 123 | 120 | 0,4 |
| | 4,2 | 146 | 146 | 0,8 |
| | 8,4 | 155 | 157 | 1,2 |
| | 12,6 | 155 | 157 | 1,4 |
| 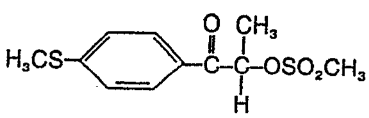 | 0 | 6 | 6 | 0,7 |
| | 2,1 | 151 | 150 | 0,5 |
| | 4,2 | 159 | 160 | 0,5 |
| | 8,4 | 161 | 158 | 1,1 |
| | 12,6 | 158 | 162 | 1,5 |
| 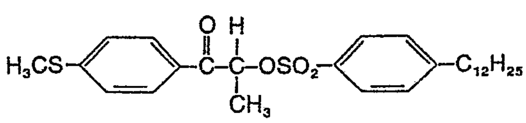 | 0 | 6 | 6 | 0,5 |
| | 2,1 | 156 | 157 | 0,4 |
| | 4,2 | 162 | 167 | 0,6 |
| | 8,4 | 161 | 170 | 1,1 |
| | 12,6 | 163 | 171 | 1,4 |
| 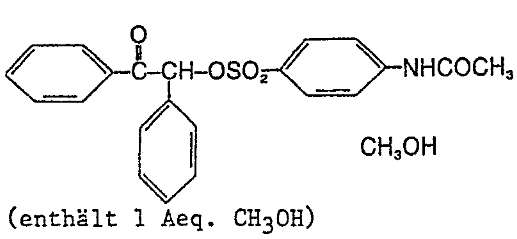 | 0 | 10 | 13 | 0,7 |
| | 2,1 | 106 | 116 | 0,3 |
| | 4,2 | 141 | 155 | 0,2 |
| $CH_3OH$ | 8,4 | 155 | 175 | 0,3 |
| (enthält 1 Aeq. $CH_3OH$) | 12,6 | 160 | 179 | 0,7 |
| 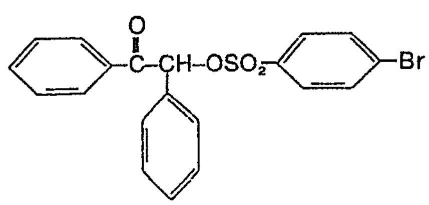 | 0 | 56 | 64 | 0,5 |
| | 2,1 | 150 | 165 | 0,2 |
| | 4,2 | 172 | 187 | 0 |
| | 8,4 | 178 | 193 | 0,2 |
| | 12,6 | 182 | 196 | 0,5 |

Tabelle 4 (Fortsetzung)

| Katalysator | Bestrahlungszeit (Sek.) | Pendelhärte in Sek. nach 30 Min. | 24 Std. | Farbtonabstand ΔE |
|---|---|---|---|---|
| 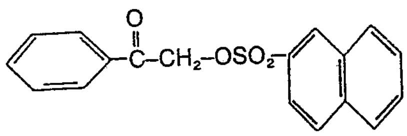 | 0 | 21 | 25 | 0,5 |
| | 2,1 | 36 | 43 | 0,3 |
| | 4,2 | 56 | 64 | 0,2 |
| | 8,4 | 90 | 101 | 0 |
| | 12,6 | 113 | 126 | 0,3 |
| 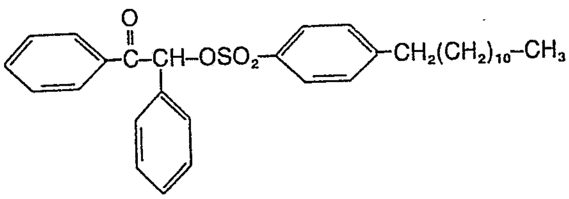 | 0 | 10 | 10 | 0,1 |
| | 2,1 | 91 | 94 | 0,3 |
| | 4,2 | 131 | 138 | 0,4 |
| | 8,4 | 155 | 170 | 0,5 |
| | 12,6 | 160 | 176 | 0,8 |
| 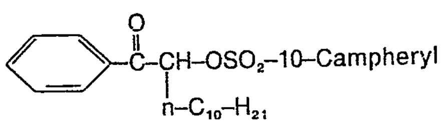 | 0 | 7 | 7 | 0,1 |
| | 2,1 | 65 | 66 | 0,1 |
| | 4,2 | 106 | 111 | 0,5 |
| | 8,4 | 144 | 155 | 0,6 |
| | 12,6 | 157 | 171 | 0,6 |
| 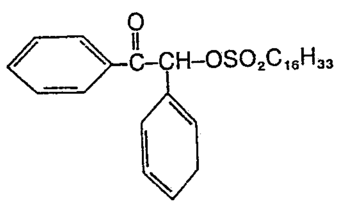 | 0 | 14 | 13 | 0,1 |
| | 2,1 | 68 | 68 | 0,4 |
| | 4,2 | 92 | 92 | 0,5 |
| | 8,4 | 115 | 118 | 0,5 |
| | 12,6 | 123 | 127 | 1,0 |
| 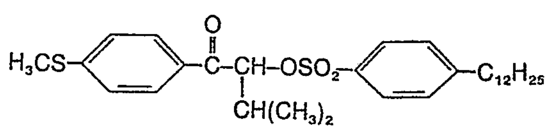 | 0 | 20 | 17 | 0,5 |
| | 2,1 | 173 | 187 | 0,5 |
| | 4,2 | 184 | 190 | 0,4 |
| | 8,4 | 176 | 193 | 1,0 |
| | 12,6 | 185 | 197 | 1,5 |
| 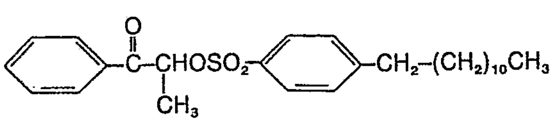 | 0 | 7 | 11 | 0,5 |
| | 2,1 | 92 | 118 | 0,5 |
| | 4,2 | 133 | 153 | 0,6 |
| | 8,4 | 161 | 182 | 0,9 |
| | 12,6 | 168 | 189 | 1,2 |

*TOS = Tosyl = p-Tolylsulfonyl

Beispiel 4:
Weitere Lackfilme wurden gemäss Beispiel 2 hergestellt, ihre Pendelhärte gemäss DIN 53 157 zur Beurteilung des Härtungsgrades, und der Farbtonabstand ΔE gemäss DIN 6174 zur Beurteilung der Verfärbung/Vergilbung bestimmt. Die Resultate sind in Tabelle 5 aufgeführt.

Ersetzt man die Benzoylgruppe in der in Tabelle 5 aufgeführten Verbindungen Nr. 5.1, 5.2 und 5.3 durch eine p-Toluylgruppe, so werden Verbindungen erhalten, welche sich als Härtungskatalysatoren ebenfalls sehr gut eignen und ähnliche Prüfungswerte ergeben wie diejenigen, die in Tabelle 5 aufgeführt sind.

Tabelle 5

| Katalysator | Bestrahlungszeit (Sek.) | Pendelhärte in Sek. nach 30 Min. | 24 Std. | Farbtonabstand ΔE |
|---|---|---|---|---|
| | 0 | 19 | 22 | 0,3 |
| 5.1 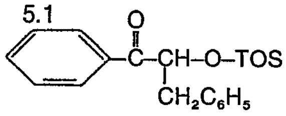 | 2,1 | 97 | 105 | 0 |
| | 4,2 | 141 | 152 | 0,1 |
| | 8,4 | 169 | 185 | 0,5 |
| | 12,6 | 174 | 192 | 0,8 |
| 5.2 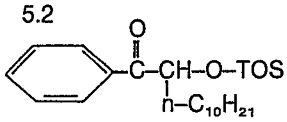 | 2,1 | 113 | 106 | 0,7 |
| | 4,2 | 154 | 147 | 0,6 |
| | 8,4 | 175 | 167 | 1,0 |
| | 12,6 | 182 | 182 | 1,2 |
| 5.3 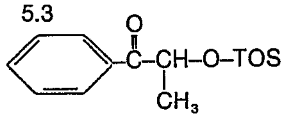 | 0 | 9 | 14 | 0,3 |
| | 2,1 | 140 | 156 | 0,3 |
| | 4,2 | 169 | 185 | 0,5 |
| | 8,4 | 175 | 192 | 1,1 |
| | 12,6 | 178 | 197 | 1,4 |

TOS = p-Tolylsulfonyl

Ebenfalls ähnliche Prüfungsergebnisse ergibt die Verbindung, welche beim Ersatz der Benzylgruppe der Verbindung 5.1 durch eine Isopropylgruppe erhalten wurde.

**Patentansprüche**

1. Härtbare Zusammensetzung, enthaltend ein säurehärtbares Harz und als Härtungskatalysator mindestens eine Verbindung der Formel I oder II

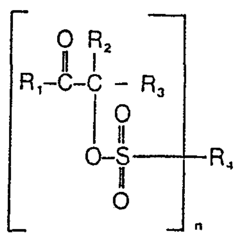
I

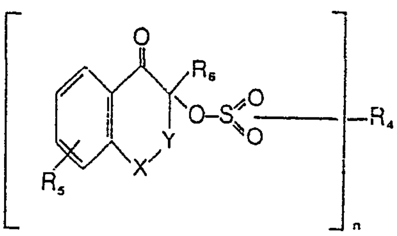
II ,

worin

n die Zahl 1 oder 2 ist, und

$R_1$ ein unsubstituiertes oder durch 1, 2 oder 3 Reste –Cl, –Br, –CN, $-NO_2$, $C_1$–$C_{12}$ Alkyl, $C_1$–$C_4$ Alkoxy, Phenyloxy, Tolyloxy, Phenylthio, Tolylthio, $C_1$–$C_8$ Alkylthio, $-SCH_2CH_2OH$, $C_1$–$C_4$ Alkylsulfonyl, Phenylsulfonyl, $C_2$–$C_4$ Alkoxycarbonyl, $C_1$–$C_4$ Alkylamino, $C_2$–$C_4$ Dialkylamino, Phenyl-CONH-, $C_1$–$C_4$ Alkyl-CONH- oder durch Benzoyl substituiertes Phenyl oder Naphthyl, ferner $R_1$ Anthryl, Phenanthryl, Thienyl, Pyridyl, Furyl, Indolyl oder Tetrahydronaphthyl ist,

$R_2$ Wasserstoff, unsubstituiertes oder durch –OH, –Cl, $C_1$–$C_4$ Alkoxy, –CN, $C_2$–$C_5$ Alkoxycarbonyl, Phenyl, Chlorphenyl, $C_7$–$C_{10}$ Alkylphenyl oder $C_7$–$C_{10}$ Alkoxyphenyl substituiertes $C_1$–$C_{10}$ Alkyl, oder ferner Benzoyl bedeutet,

$R_3$ die gleiche Bedeutung wie $R_2$ hat, und ferner unsubstituiertes oder durch –Cl, $C_1$–$C_4$ Alkyl, $C_1$–$C_4$ Alkoxy oder $C_1$–$C_4$ Alkylthio substituiertes Phenyl, $C_2$–$C_8$ Alkoxycarbonyl, –CN, $C_1$–$C_4$ Alkyl-NHCO-, Phenyl-NHCO- oder $-CONH_2$ bedeutet, oder $R_2$ und $R_3$ zusammen mit dem Kohlenstoffatom, an das sie gebunden sind, einen $C_4$–$C_6$ Cycloalkylring darstellen,

X –O–, –S–, $-SO_2-$, $-CH_2-$, $-C(CH_3)_2-$ oder $>$–$COR_7$ bedeutet, wobei $R_7$ ein $C_1$–$C_4$ Alkyl oder Phenyl darstellt, und

Y eine direkte Bindung oder $-CH_2-$ bedeutet, und

$R_4$ wenn n = 1, $C_1$–$C_{18}$ ALkyl, unsubstituiertes oder durch Halogen, $C_1$–$C_{12}$ Alkyl, $C_1$–$C_4$ Alkoxy, $C_1$–$C_4$ Alkyl-CONH-, Phenyl-CONH-, $-NO_2$ oder Benzoyl substituiertes Phenyl, unsubstituiertes oder durch Halogen, $C_1$–$C_{12}$ Alkyl oder $C_1$–$C_4$ Alkoxy substituiertes Naphthyl, $C_5$–$C_6$ Cycloalkyl, $C_7$–$C_9$ Aralkyl, 10-Campheryl, $-CF_3$, $-CCl_3$, –F oder $-NH_2$ bedeutet, und

$R_4$ wenn n = 2, eine $-(CH_2)_m$-Gruppe, wobei m die Zahl 2 bis 8 darstellt, oder unsubstituiertes oder durch $C_1$–$C_{12}$ Alkyl substituiertes Phenylen oder Naphthylen ist, und

$R_5$ –H oder 1, 2 oder 3 Reste –Cl, –Br, –$NO_2$, $C_1$–$C_{12}$ Alkyl, $C_1$–$C_4$ Alkoxy, Phenoxy, Phenylthio, $C_1$–$C_8$ Alkylthio oder –$SCH_2CH_2OH$ bedeutet, und

$R_6$ Wasserstoff oder unsubstituiertes oder durch –OH, –Cl, $C_1$–$C_4$ Alkoxy, –CN, $C_2$–$C_5$ Alkoxacarbonyl, Phenyl, Chlorphenyl, $C_7$–$C_{10}$ Alkylphenyl oder $C_7$–$C_{10}$ Alkoxyphenyl substituiertes $C_1$–$C_8$ Alkyl, unsubstituiertes oder durch –Cl, $C_1$–$C_4$ Alkyl, $C_1$–$C_4$ Alkoxy oder $C_1$–$C_4$ Alkylthio substituiertes Phenyl, $C_2$–$C_8$ Alkoxycarbonyl oder –CN bedeutet.

2. Zusammensetzung gemäss Anspruch 1, worin der Härtungskatalysator eine Verbindung der Formel I ist, worin

$R_1$ ein unsubstituiertes oder durch –Cl, –Br, $C_1$–$C_8$ Alkyl, $C_1$–$C_4$ Alkoxy, Phenyloxy, Tolyloxy, Phenylthio, Tolylthio, –$SCH_2CH_2OH$, $C_1$–$C_8$ Alkylthio oder Benzoyl substituiertes Phenyl oder Naphthyl, ferner Anthryl oder Phenanthryl, und

$R_2$ Wasserstoff oder unsubstituiertes oder durch –OH, –Cl, –CN, $C_2$–$C_5$ Alkoxycarbonyl, Phenyl, Chlorphenyl, $C_7$–$C_{10}$ Alkylphenyl oder $C_7$–$C_{10}$ Alkoxyphenyl substituiertes $C_1$–$C_8$ Alkyl bedeuten,

$R_3$ die gleiche obige Bedeutung wie $R_2$ hat, ferner unsubstituiertes oder durch –Cl, $C_1$–$C_4$ Alkyl, $C_1$–$C_4$ Alkoxy oder $C_1$–$C_4$ Alkylthio substituiertes Phenyl, $C_2$–$C_4$ Alkoxycarbonyl oder –CN bedeutet, oder $R_2$ und $R_3$ zusammen mit dem Kohlenstoffatom, an das sie gebunden sind, einen $C_4$–$C_6$ Cycloalkylring bilden, und

$R_4$ wenn $n = 1$, $C_1$–$C_{18}$ Alkyl, unsubstituiertes oder durch –Cl, $C_1$–$C_{12}$ Alkyl oder $C_1$–$C_4$ Alkoxy substituiertes Phenyl, unsubstituiertes oder durch –Cl oder $C_1$–$C_{12}$ Alkyl substituiertes Naphthyl, oder $R_4$ ferner 10-Campheryl, –$CF_3$ oder –F bedeutet, und

$R_4$ wenn $n = 2$, eine –$(CN_2)_m$-Gruppe, Phenylen oder Naphthylen bedeutet, wobei m die Zahl 2, 3 oder 4 darstellt.

3. Zusammensetzung gemäss Anspruch 1, worin der Härtungskatalysator eine Verbindung der Formel I oder II ist, worin n die Zahl 1 ist.

4. Zusammensetzung gemäss Anspruch 1, worin der Härtungskatalysator eine Verbindung der Formel I ist, worin $n = 1$, $R_1$ ein unsubstituiertes oder durch Chlor, Methyl, Methoxy, Methylthio, Phenylthio, –$SCH_2CH_2OH$ oder Benzoyl substituiertes Phenyl, $R_2$ Wasserstoff, $C_1$–$C_4$ Alkyl und $R_3$ Wasserstoff, $C_1$–$C_4$ Alkyl oder Phenyl bedeuten, oder $R_2$ und $R_3$ zusammen mit dem Kohlenstoffatom, an das sie gebunden sind, einen Cyclohexanring bilden, und $R_4$ $C_1$–$C_{18}$ Alkyl, unsubstituiertes oder durch –Cl oder $C_1$–$C_{12}$ Alkyl substituiertes Phenyl oder Naphthyl, oder 10-Campheryl bedeutet.

5. Zusammensetzung gemäss Anspruch 1, worin der Härtungskatalysator eine Verbindung der Formel II ist, in der $R_5$ Wasserstoff bedeutet.

6. Zusammensetzung gemäss Anspruch 1, worin der Härtungskatalysator eine Verbindung der Formel II ist, in der $n = 1$, $R_5$ und $R_6$ Wasserstoff, X und Y eine –$CH_2$-Gruppe und $R_4$ $C_1$–$C_{18}$ Alkyl, unsubstituiertes oder durch $C_1$–$C_{12}$ Alkyl substituiertes Phenyl oder Naphthyl, ferner 10-Campheryl bedeuten.

7. Zusammensetzung gemäss Anspruch 1, worin der Härtungskatalysator eine Verbindung der Formel I ist, worin $n = 1$, $R_1$ Phenyl, p-Tolyl oder p-Methylthiophenyl, $R_2$ Wasserstoff, $R_3$ Methyl, Isopropyl, n-Decyl oder Benzyl und $R_4$ Phenyl, p-Tolyl oder p–n-Dodecalphenyl bedeuten.

8. Zusammensetzung gemäss Anspruch 1, worin als Härtungskatalysator eine der folgenden Verbindungen der Formeln I und II

2-[ (p-Tolysulfonyl)oxy]-1-phenyl-1-propanon,
2-[ (p-Tolylsulfonyl)oxy]-1-p-tolyl-1-propanon,
2-[ (p-Tolylsulfonyl)oxy]-1-p-methylthiophenyl-1-propanon,
2-[ (p-Tolylsulfonyl)oxy]-1,3-bis-phenyl-1-propanon,
2-[ (p-Tolylsulfonyl)oxy]-3-phenyl-1-p-tolyl-1-propanon,
2-[ (p-Tolylsulfonyl)oxy]-3-methyl-1-phenyl-1-butanon,
2-[ (p-Tolylsulfonyl)oxy]-3-methyl-1-p-tolyl-1-butanon,
2-[ (p-Tolylsulfonyl)oxy]-1-phenyl-1-dodecanon,
2-[ (p-Tolylsulfonyl)oxy]-1-p-tolyl-1-dodecanon,
2-[ (p-Laurylphenylsulfonyl)oxy]-3-methyl-1-p-methylthiophenyl-1-butanon und
2-[ (p-Tolylsulfonyl)oxy]-tetralon-(1)

eingesetzt wird.

9. Verbindungen der Formel X

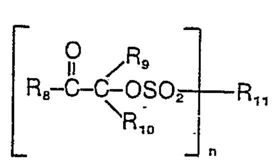

(X) ,

worin

n die Zahl 1 oder 2 ist, und

$R_8$ ein durch $C_2$–$C_{12}$ Alkyl, $C_2$–$C_4$ Alkoxy, Phenyloxy, Tolyloxy, Phenylthio, Tolylthio, $C_1$–$C_8$ Alkylthio, –$SCH_2CH_2OH$, $C_1$–$C_4$ Alkylsulfonyl, Phenylsulfonyl, $C_1$–$C_4$ Alkylamino, $C_2$–$C_4$ Dialkylamino, Phenyl-CONH-, $C_1$–$C_4$ Alkyl-CONH- oder durch Benzoyl substituiertes Phenyl oder Naphthyl ist, oder $R_8$ ferner Anthryl, Phenanthryl, Thienyl, Pyridyl, Furyl, Indolyl oder Tetrahydronaphthyl ist,

$R_9$ $C_2$–$C_8$ Alkyl oder durch –OH, –Cl, $C_1$–$C_4$ Alkoxy, –CN, $C_2$–$C_5$ Alkoxycarbonyl, Phenyl, Chlorphenyl, $C_7$–$C_{10}$ Alkylphenyl oder $C_7$–$C_{10}$ Alkoxyphenyl substituiertes $C_1$–$C_8$ Alkyl bedeutet,

$R_{10}$ die gleiche obige Bedeutung wie $R_9$ hat, und ferner durch –Cl, $C_1$–$C_4$ Alkyl, $C_1$–$C_4$ Alkoxy oder $C_1$–$C_4$ Alkylthio substituiertes Phenyl, $C_4$–$C_8$ Alkoxycarbonyl, –CN, $C_1$–$C_4$ Alkyl-NHCO-, Phenyl-NHCO- oder –$CONH_2$ bedeutet, oder $R_9$ und $R_{10}$ zusammen mit dem Kohlenstoffatom, an das sie gebunden sind, einen $C_4$–$C_6$ Cycloalkylring bilden,

$R_{11}$ wenn $n = 1$, $C_2$–$C_{18}$ Alkyl, durch $C_2$–$C_{12}$ Alkyl, $C_2$–$C_4$ Alkoxy, $C_1$–$C_4$ Alkyl-CONH-, Phenyl-CONH- oder Benzoyl substituiertes Phenyl, unsubstituiertes oder durch Halogen, $C_1$–$C_{12}$ Alkyl oder $C_1$–$C_4$ Alkoxy substituiertes Naphthyl, $C_5$–$C_6$ Cycloalkyl, $C_7$–$C_9$ Aralkyl, 10-Campheryl, –$CF_3$, –$CCl_3$, –F oder –$NH_2$ bedeutet, und

$R_{11}$ wenn $n = 2$, eine –$(CH_2)_m$-Gruppe, wobei m die Zahl 2 bis 8 darstellt, oder unsubstituiertes

oder durch $C_1$–$C_{12}$ Alkyl substituiertes Phenylen oder Naphthylen ist.

10. Verbindungen der Formel II, gemäss Anspruch 1.

11. Zusammensetzung gemäss Anspruch 1, dadurch gekennzeichnet, dass die härtbare Zusammensetzung 0,1 bis 10 Gew.-%, bezogen auf das lösungsmittelfreie Harz, eines Härtungskatalysators der Formel I oder II enthält.

12. Zusammensetzung gemäss Anspruch 1, dadurch gekennzeichnet, dass das Harz ein Gemisch eines Aminoharzes mit einem Harz, enthaltend äthylenische Bindungen, ist.

13. Zusammensetzung gemäss Anspruch 1, dadurch gekennzeichnet, dass sie als säurehärtbares Harz ein Phenolharz, ein Phenol-Formaldehydharz, ein Harnstoff-Formaldehydharz oder ein Gemisch eines solchen Harzes mit einem anderen säurehärtbaren Harz enthält.

14. Zusammensetzung gemäss Anspruch 1, dadurch gekennzeichnet, dass sie als Harz ein Gemisch aus Acrylaten und Melaminharzen (Hybridsystemen) und zusätzlich radikalische Polymerisationsintiatoren und gegebenenfalls Photoinitiatoren enthält.

15. Zusammensetzung gemäss Anspruch 1, dadurch gekennzeichnet, dass sie ausser dem Harz und dem Härtungskatalysator noch sonstige, in der Technologie der Harze übliche Zusatzstoffe enthält.

16. Verfahren zum Härten von säurehärtbaren Harzen, die einen Härtungskatalysator gemäss Anspruch 1 enthalten, dadurch gekennzeichnet, dass man das Harz mit kurzwelligem Licht bestrahlt und anschliessend erwärmt.

17. Verwendung einer Zusammensetzung des Anspruches 1 zur Industrielackierung.

18. Verwendung einer Zusammensetzung gemäss Anspruch 1 zum Blechdruck.

19. Verwendung einer Zusammensetzung gemäss Anspruch 1 zur Herstellung einer Relief-Form.

**Claims**

1. A curable composition containing an acidcurable resin and, as the curing catalyst, a compound of the formula I or II

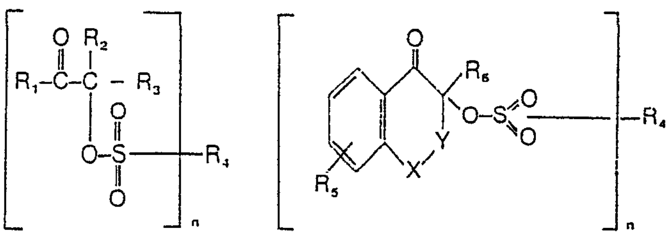

I II

in which n is the number 1 or 2, and $R_1$ is phenyl or naphthyl, each of which is unsubstituted or substituted by 1, 2 or 3 radicals belonging to the group comprising –Cl, –Br, –CN, $-NO_2$, $C_1$–$C_{12}$-alkyl, $C_1$–$C_4$-alkoxy, phenoxy, tolyloxy, phenylthio, tolylthio, $C_1$–$C_8$-alkylthio, $-SCH_2CH_2OH$, $C_1$–$C_4$-alkylsulfonyl, phenylsulfonyl, $C_2$–$C_4$-alkoxycarbonyl, $C_1$–$C_4$-alkylamino, $C_2$–$C_4$-dialkylamino, phenyl-CONH, $C_1$–$C_4$-alkyl-CONH- or benzoyl, or $R_1$ is also anthryl, phenathryl, thienyl, pyridyl, furyl, indolyl or tetrahydronaphthyl, $R_2$ is hydrogen or $C_1$–$C_{10}$-alkyl which is unsubstituted or substituted by –OH, –Cl, $C_1$–$C_4$-alkoxy, –CN, $C_2$–$C_5$-alkoxycarbonyl, phenyl, chlorophenyl, $C_7$–$C_{10}$-alkylphenyl or $C_7$–$C_{10}$-alkoxyphenyl, or is also benzoyl, $R_3$ is as defined for $R_2$, and is also phenyl which is unsubstituted or substituted by –Cl, $C_1$–$C_4$-alkyl, $C_1$–$C_4$-alkoxy or $C_1$–$C_4$-alkylthio, or is $C_2$–$C_8$-alkoxycarbonyl, –CN, $C_1$–$C_4$-alkyl-NHCO-, phenyl-NHCO- or $-CONH_2$, or $R_2$ and $R_3$, together with the carbon atom to which they are attached, constitute a $C_4$–$C_6$-cycloalkyl ring, X is –O–, –S–, $-SO_2-$, $-CH_2-$, $-C(CH_3)_2-$ or $>$–$COR_7$, $R_7$ being $C_1$–$C_4$-alkyl or phenyl, and

Y is a direct bond or $-CH_2-$, and, if n = 1, $R_4$ is $C_1$–$C_{18}$-alkyl, phenyl which is unsubstituted or substituted by halogen, $C_1$–$C_{12}$-alkyl, $C_1$–$C_4$-alkoxy, $C_1$–$C_4$-alkyl-CONH-, phenyl-CONH-, $-NO_2$ or benzoyl, naphthyl which is unsubstituted or substituted by halogen, $C_1$–$C_{12}$-alkyl or $C_1$–$C_4$-alkoxy, or $R_4$ is $C_5$–$C_6$-cycloalkyl, $C_7$–$C_9$-aralkyl, 10-camphoryl, $-CF_3$, $-CCl_3$, –F or $-NH_2$, and, if n = 2, $R_4$ is a $-(CH_2)_m$-group in which m is the number 2 to 8, or $R_4$ is phenylene or naphthylene, each of which is unsubstituted or substituted by $C_1$–$C_{12}$-alkyl, $R_5$ is H or 1, 2 or 3 radicals belonging to the group comprising –Cl, –Br, $-NO_2$, $C_1$–$C_{12}$-alkyl, $C_1$–$C_4$-alkoxy, phenoxy, phenylthio, $C_1$–$C_8$-alkylthio or $-SCH_2CH_2OH$, and $R_6$ is hydrogen of $C_1$–$C_8$-alkyl which is unsubstituted or substituted by –OH, –Cl, $C_1$–$C_4$-alkoxy, –CN, $C_2$–$C_5$-alkoxycarbonyl, phenyl, chlorophenyl, $C_7$–$C_{10}$-alkylphenyl or $C_7$–$C_{10}$-alkoxyphenyl, phenyl which is unsubstituted or substituted by –Cl, $C_1$–$C_4$-alkyl, $C_1$–$C_4$-alkoxy or $C_1$–$C_4$-alkylthio, or $R_6$ is $C_2$–$C_8$-alkoxycarbonyl or –CN.

2. A composition according to claim 1, in which the curing catalyst is a compound of the formula I in which $R_1$ is phenyl or naphthyl, each of which is unsubstituted or substituted by –Cl, –Br, $C_1$–$C_8$-alkyl, $C_1$–$C_4$-alkoxy, phenoxy, tolyloxy, phenylthio, tolylthio, $-SCH_2CH_2OH$, $C_1$–$C_8$-alkylthio or benzoyl, or is anthryl or phenanthryl, $R_2$ is hydrogen or $C_1$–$C_8$-alkyl which is unsubstituted or substituted

by –OH, –Cl, –CN, $C_2$–$C_5$-alkoxycarbonyl, phenyl, chlorophenyl, $C_7$–$C_{10}$-alkylphenyl or $C_7$–$C_{10}$-alkoxyphenyl, $R_3$ is as defined for $R_2$ above, and is also phenyl which is unsubstituted or substituted by –Cl, $C_1$–$C_4$-alkyl, $C_1$–$C_4$-alkoxy or $C_1$–$C_4$-alkylthio, or is $C_2$–$C_4$-alkoxycarbonyl or –CN, or $R_2$ and $R_3$, together with the carbon atom to which they are attached, form a $C_4$–$C_6$-cycloalkyl ring and, if n = 1, $R_4$ is $C_1$–$C_{18}$-alkyl, phenyl which is unsubstituted or substituted by –Cl, $C_1$–$C_{12}$-alkyl or $C_1$–$C_4$-alkoxy, or is naphthyl which is unsubstituted or substituted by –Cl or $C_1$–$C_{12}$-alkyl, or $R_4$ is also 10-camphoryl, $-CF_3$ or –F, and, if n = 2, $R_4$ is a $-(CH_2)_m$ group, phenylene or naphthylene, m being the number 2, 3 or 4.

3. A composition according to claim 1, in which the curing catalyst is a compound of the formula I or II in which n is the number 1.

4. A composition according to claim 1 in which the curing catalyst is a compound of the formula I in which n = 1, $R_1$ is phenyl which is unsubstituted or substituted by chlorine, methyl, methoxy, methylthio, phenylthio, $-SCH_2CH_2OH$ or benzoyl, $R_2$ is hydrogen or $C_1$–$C_4$-alkyl and $R_3$ is hydrogen, $C_1$–$C_4$-alkyl or phenyl, or $R_2$ and $R_3$, together with the carbon atom to which they are attached, form a cyclohexane ring, and $R_4$ is $C_1$–$C_{18}$-alkyl, phenyl or naphthyl, each of which is unsubstituted or substituted by –Cl or $C_1$–$C_{12}$-alkyl, or is 10-camphoryl.

5. A composition according to claim 1, in which the curing catalyst is a compound of the formula II in which $R_5$ is hydrogen.

6. A composition according to claim 1, in which the curing catalyst is a compound of the formula II in which n = 1, $R_5$ and $R_6$ are hydrogen, X and Y are a $-CH_2$-group and $R_4$ is $C_1$–$C_{18}$-alkyl, or phenyl or naphthyl, each of which is unsubstituted or substituted by $C_1$–$C_{12}$-alkyl, or is also 10-camphoryl.

7. A composition according to claim 1, in which the curing catalyst is a compound of the formula I in which n = 1, $R_1$ is phenyl, p-tolyl or p-methylthiophenyl, $R_2$ is hydrogen, $R_3$ is methyl, isopropyl, n-decyl or benzyl and $R_4$ is phenyl, p-tolyl or p-n-dodecylphenyl.

8. A composition according to claim 1, in which the curing catalyst employed is one of the group consisting of the following compounds of formulae I and II:

2-[ (p-tolylsulfonyl)-oxy]-1-phenyl-1-propanone,
2-[ (p-tolylsulfonyl)oxy]-1-p-tolyl-1-propanone,
2-[ (p-tolylsulfonyl)oxy]-1-p-methylthiophenyl-1-propanone,
2-[ (p-tolylsulfonyl)oxy]-1,3-bis-phenyl-1-propanone,
2-[ (p-tolylsulfonyl)oxy]-3-phenyl-1-p-tolyl-1-propanone,
2-[ (p-tolylsulfonyl)oxy]-3-methyl-1-phenyl-1-butanone,
2-[ (p-tolylsulfonyl)oxy]-3-methyl-1-p-tolyl-1-butanone,
2-[ (p-tolylsulfonyl)oxy]-1-phenyl-1-dodecanone,
2-[ (p-tolylsulfonyl)oxy]-1-p-tolyl-dodecanone,
2-[ (p-laurylphenylsulfonyl)oxy]-3-methyl-1-p-methylthiophenyl-1-butanone and
2-[ (p-tolylsulfonyl)oxy]-tetral-1-one.

9. A compound of the formula X

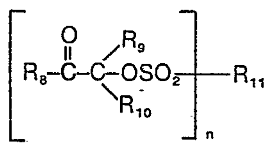
(X) ,

in which n is the number 1 or 2, and $R_8$ is phenyl or naphthyl, each of which is substituted by $C_2$–$C_{12}$-alkyl, $C_2$–$C_4$-alkoxy, phenoxy, tolyloxy, phenylthio, tolylthio, $C_1$–$C_8$-alkylthio, $-SCH_2CH_2OH$, $C_1$–$C_4$-alkylsulfonyl, phenylsulfonyl, $C_1$–$C_4$-alkylamino, $C_2$–$C_4$-dialkylamino, phenyl-CONH-, $C_1$–$C_4$-alkyl-CONH- or benzoyl, or $R_8$ is also anthryl, phenanthryl, thienyl, pyridyl, furyl, indolyl or tetrahydronaphthyl, $R_9$ is $C_2$–$C_8$-alkyl, or $C_1$–$C_8$-alkyl which is substituted by –OH, –Cl, $C_1$–$C_4$-alkoxy, –CN, $C_2$–$C_5$-alkoxycarbonyl, phenyl, chlorophenyl, $C_7$–$C_{10}$-alkylphenyl or $C_7$–$C_{10}$-alkoxyphenyl, $R_{10}$ is as defined above for $R_9$, and is also phenyl which is substituted by –Cl, $C_1$–$C_4$-alkyl, $C_1$–$C_4$-alkoxy or $C_1$–$C_4$-alkylthio, or is $C_4$–$C_8$-alkoxycarbonyl, –CN, $C_1$–$C_4$-alkyl-NHCO-, phenyl-NHCO- or $-CONH_2$ or $R_9$ and $R_{10}$, together with the carbon atom to which they are attached, form a $C_4$–$C_6$-cycloalkyl ring, and, if n = 1, $R_{11}$ is $C_2$–$C_{18}$-alkyl, phenyl which is substituted by $C_2$–$C_{12}$-alkyl, $C_2$–$C_4$-alkoxy, $C_1$–$C_4$-alkyl-CONH-, phenyl-CONH- or benzoyl, naphthyl which is unsubstituted or substituted by halogen, $C_1$–$C_{12}$-alkyl or $C_1$–$C_4$-alkoxy, or is $C_5$–$C_6$-cycloalkyl, $C_7$–$C_9$-aralkyl, 10-camphoryl, $-CF_3$, $-CCl_3$, –F or $-NH_2$, and, if n = 2, $R_{11}$ is a $-(CH_2)_m$-group in which m is the number 2 to 8, or $R_{11}$ is phenylene or naphthylene, each of which is unsubstituted or substituted by $C_1$–$C_{12}$-alkyl.

10. A compound of the formula II according to claim 1.

11. A composition according to claim 1, wherein the curable composition contains 0.1 to 10% by weight, based on the solvent-free resin, of a curing catalyst of the formula I or II.

12. A composition according to claim 1, wherein the resin is a mixture of an amino resin with a resin containing ethylenic bonds.

13. A composition according to claim 1, which contains, as the acid-curable resin, a phenolic resin, a phenol-formaldehyde resin, a ureaformaldehyde resin or a mixture of a resin of this type with another acid-curable resin.

14. A composition according to claim 1, which contains, as the resin, a mixture of acrylates and melamine resins (hybrid systems) and, in addition, free-radical polymerisation initiators and, if desired, photo-initiators.

15. A composition according to claim 1, which, in addition to the resin and the curing catalyst, also contains other additives which are customarily employed in the technology of resins.

16. A process for curing acid-curable resins containing a curing catalyst according to claim 1, which comprises irradiating the resin with shortwave light, followed by warming.

17. Use of a composition of claim 1 for industrial lacquering.

18. Use of a composition of claim 1 for tin-printing.

19. Use of a composition according to claim 1 for the production of a relief form.

**Revendications**

1. Composition durcissable qui contient une résine durcissable par un acide et, comme catalyseur de durcissement, au moins un composé répondant à l'une des formules I et II:

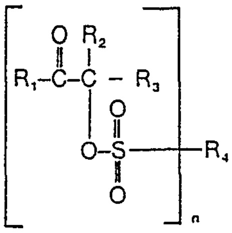

I

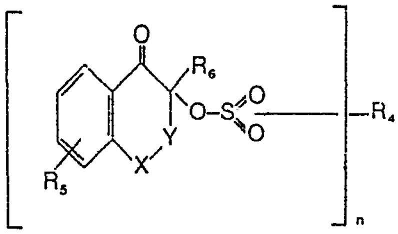

II

dans lesquelles:

n représente le nombre 1 ou le nombre 2,

$R_1$ représente un radical phényle ou naphtyle non substitué ou porteur d'un, de deux ou de trois substituants pris dans l'ensemble consitué par –Cl, –Br, –CN, $-NO_2$, les alkyles en $C_1$–$C_{12}$, les alcoxy en $C_1$–$C_4$, le phénoxy, les tolyloxy, le phénylthio, les tolylthio, les alkylthio en $C_1$–$C_8$, $-SCH_2-CH_2OH$, les alkylsulfonyles en $C_1$–$C_4$, le phénylsulfonyle, les alcoxycarbonyles en $C_2$–$C_4$, les alkylamino en $C_1$–$C_4$, les dialkylamino en $C_2$–$C_4$, le radical phényl-CONH- et les radicaux alkyl-CONH- à alkyle en $C_1$–$C_4$ ou d'un radical benzoyle, ou représente un radical anthryle, phénanthryle, thiényle, pyridyle, furyle, indolyle ou tétrahydronaphtyle.

$R_2$ représente l'hydrogène, un alkyle en $C_1$–$C_{10}$ non substitué ou porteur d'un substituant pris dans l'ensemble constitué par –OH, –Cl, les alcoxy en $C_1$–$C_4$, –CN, les alcoxycarbonyles en $C_2$–$C_5$, le phényle, les chlorophényles, les alkylphényles en $C_7$–$C_{10}$ et les alkoxyphényles en $C_7$–$C_{10}$, ou représente un radical benzoyle,

$R_3$ a l'une des significations qui viennent d'être données pour $R_2$ et peut en outre représenter un phényle non substitué ou porteur d'un substituant pris dans l'ensemble constitué par –Cl, les alkyles en $C_1$–$C_4$, les alcoxy en $C_1$–$C_4$ et les alkylthio en $C_1$–$C_4$, un alcoxycarbonyle en $C_2$–$C_8$, –CN, un radical alkyl-NHCO- à alkyle en $C_1$–$C_4$, un radical phényl-NHCO- ou $-CONH_2$, ou

$R_2$ et $R_3$ forment ensemble, et avec l'atome de carbone qui les unit, un noyau de cycloalcane en $C_4$–$C_6$,

X représente –O–, –S–, $-SO_2-$, $-CH_2-$, $-C(CH_2)_2-$ ou $>N-COR_7$, le symbole $R_7$ désignant un alkyle en $C_1$–$C_4$ ou un phényle,

Y représente une liaison directe ou $-CH_2-$,

$R_4$ représente:

– dans le cas où n est égal à 1, un alkyle en $C_1$–$C_{18}$, un phényle non substitué ou porteur d'un substituant pris dans l'ensemble constitué par les halogènes, les alkyles en $C_1$–$C_{12}$, les alcoxy en $C_1$–$C_4$, les radicaux alkyl-CONH- à alkyle en $C_1$–$C_4$, le radical phényl-CONH-, $-NO_2$ et le radical benzoyle, un naphtyle non substitué ou porteur d'un substituant pris dans l'ensemble constitué par les halogènes, les alkyles en $C_1$–$C_{12}$ et les alcoxy en $C_1$–$C_4$, un cycloalkyle en $C_5$ ou $C_6$, un aralkyle en $C_7$–$C_9$, un oxo-2 bornyle-10 («camphéryle-10»), $-CF_3$, $-CCl_3$, –F ou $-NH_2$, et

– dans le cas où n est égal à 2, un radical $-(CH_2)_m-$ dont l'indice m désigne un nombre de 2 à 8, ou un radical phénylène ou naphthylène non substitué ou porteur d'un alkyle en $C_1$–$C_{12}$,

$R_5$ représente –H ou un, deux ou trois substituants pris dans l'ensemble constitué par –Cl, –Br, $-NO_2$, les alkyles en $C_1$–$C_{12}$, les alcoxy en $C_1$–$C_4$, le phénoxy, le phénylthio, les alkylthio en $C_1$–$C_8$ et le radical $-SCH_2-CH_2OH$, et

$R_6$ représente l'hydrogène, un alkyle en $C_1$–$C_8$ non substitué ou porteur d'un radical –OH, –Cl, alcoxy en $C_1$–$C_4$, –CN, alcoxycarbonyle en $C_2$–$C_5$, phényle, chlorophényle, alkylphényle en $C_7$–$C_{10}$ ou alcoxyphényle en $C_7$–$C_{10}$, un phényle non substitué ou porteur d'un radical –Cl, alkyle en $C_1$–$C_4$, alcoxy en $C_1$–$C_4$ ou alkylthio en $C_1$–$C_4$, un alcoxycarbonyle en $C_2$–$C_8$ ou –CN.

2. Composition selon la revendication 1 dans laquelle le catalyseur de durcissement est un composé de formule I dans lequel:

$R_1$ représente un radical phényle ou naphtyle non substitué ou porteur d'un radical –Cl, –Br, alkyle en $C_1$–$C_8$, alcoxy en $C_1$–$C_4$, phénoxy, tolyloxy, phénylthio, tolylthio, $-SCH_2CH_2OH$, alkylthio en $C_1$–$C_8$ ou benzoyle, ou représente un radical anthryle ou phénanthryle,

$R_2$ représente l'hydrogène ou un alkyle en $C_1$–$C_8$ non substitué ou porteur d'un radical –OH, –Cl, –CN, alcoxycarbonyle en $C_2$–$C_5$, phényle, chlorophényle, alkylphényle en $C_7$–$C_{10}$ ou alcoxyphényle en $C_7$–$C_{10}$,

$R_3$ a l'une des significations qui viennent d'être données pour $R_2$ ou représente un phényle non substitué ou porteur d'un radical –Cl, alkyle en $C_1$–$C_4$, alcoxy en $C_1$–$C_4$ ou alkylthio en $C_1$–$C_4$, un alcoxycarbonyle en $C_2$–$C_4$ ou un radical –CN, ou

$R_2$ et $R_3$ forment ensemble et avec l'atome de carbone auquel ils sont liés un noyau de cycloalcane en $C_4$–$C_6$, et

$R_4$ représente:

– dans le cas où n est égal à 1, un alkyle en $C_1$–$C_{18}$, un phényle non substitué ou porteur d'un radical –Cl, alkyle en $C_1$–$C_{12}$ ou alcoxy en $C_1$–$C_4$, un naphtyle non substitué ou porteur d'un –Cl ou d'un alkyle en $C_1$–$C_{12}$, un oxo-2 bornyle-10, $-CF_3$ ou –F, et

– dans le cas où n est égal à 2, un radical $-(CH_2)_m-$ dont l'indice m est égal à 2, à 3 ou à 4 ou un radical phénylène ou naphthylène.

3. Composition selon la revendication 1 dans laquelle le catalyseur de durcissement est un composé de formule I ou II dans lequel n est égal à 1.

4. Composition selon la revendication 1 dans laquelle le catalyseur de durcissement est un composé de formule I dans lequel n est égal à 1, $R_1$ représente un radical phényle non substitué ou porteur d'un substituant pris dans l'ensemble constitué par le chlore et les radicaux méthyle, méthoxy, méthylthio, phénylthio, $-SCH_2CH_2OH$ et benzoyle, $R_2$ représente l'hydrogène ou un alkyle en $C_1$–$C_4$, $R_3$ représente l'hydrogène, un alkyle en $C_1$–$C_4$ ou un phényle ou encore $R_2$ et $R_3$ forment ensemble et avec l'atome de carbone auquel ils sont liés un noyau de cyclohexane, et $R_4$ représente un alkyle en $C_1$–$C_{18}$, un radical phényle ou naphthyle non substitué ou porteur d'un –Cl ou d'un alkyle en $C_1$–$C_{12}$, ou un radical oxo-2 bornyle-10 («camphéryle-10»).

5. Composition selon la revendication 1 dans laquelle le catalyseur de durcissement est un composé de formule II dans lequel $R_5$ représente l'hydrogène.

6. Composition selon la revendication 1 dans laquelle le catalyseur de durcissement est un composé de formule II dans lequel n est égal à 1, $R_5$ et $R_6$ représentent chacun l'hydrogène, X et Y représentent chacun un radical $-CH_2-$, et $R_4$ représente un alkyle en $C_1$–$C_{18}$, un radical phényle ou naphtyle non substitué ou porteur d'un alkyle en $C_1$–$C_{12}$, ou un radical oxo-2 bornyle-10.

7. Composition selon la revendication 1 dans laquelle le catalyseur de durcissement est un composé de formule I dans lequel n est égal à 1, $R_1$ représente un radical phényle, p-tolyle ou p-méthylthio-phényle, $R_2$ l'hydrogène, $R_3$ un radical méthyle, isopropyle, n-décyle ou benzyle, et $R_4$ un radical phényle, p-tolyle ou p-n-dodécyl -phényle.

8. Composition selon la revendication 1 qui contient, comme catalyseur de durcissement, l'un des composés suivants qui répondent à la formule I ou la formule II:

le (p-tolyl-sulfonyloxy)-2 phényl-1 oxo-1 propane
le (p-tolyl-sulfonyloxy)-2 p-tolyl-1 oxo-1 propane
le (p-tolyl-sulfonyloxy)-2 (p-méthylthio-phényl)-1 oxo-1 propane
le (p-tolyl-sulfonyloxy)-2 diphényl-1,3 oxo-1 propane
le (p-tolyl-sulfonyloxy)-2 phényl-3 p-tolyl-1 oxo-1 propane
le (p-tolyl-sulfonyloxy)-2 méthyl-3 phényl-1 oxo-1 propane
le (p-tolyl-sulfonyloxy)-2 méthyl-3 p-tolyl-1 oxo-1 propane
le (p-tolyl-sulfonyloxy)-2 phényl-1 oxo-1 dodécane
le (p-tolyl-sulfonyloxy)-2 p-tolyl-1 oxo-1 dodécane
le (p-lauryl-phénylsulfonyloxy)-2 méthyl-3 (p-méthylthiophényl)-1 oxo-1 butane et
la (p-tolyl-sulfonyloxy)-2 tétralone-(1).

9. Composés répondant à la formule X:

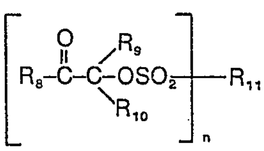
(X) ,

dans laquelle:

n représente le nombre 1 ou le nombre 2,

$R_8$ représente un radical phényle ou naphthyle qui porte un alkyle en $C_2$–$C_{12}$, un alcoxy en $C_2$–$C_4$, un phényloxy, un tolyloxy, un phénylthio, un tolylthio, un alkylthio en $C_1$–$C_8$, un radical $-SCH_2-CH_2OH$, un alkylsulfonyle en $C_1$–$C_4$, un phénylsulfonyle, un alkylamino en $C_1$–$C_4$, un dialkylamino en $C_2$–$C_4$, un benzoylamino, un alkylcarbonylamino à alkyle en $C_1$–$C_4$ ou un benzoyle, ou représente un radical anthryle, phénanthryle, thiényle, pyridyle, furyle, indolyle ou tétrahydronaphthyle,

$R_9$ représente un alkyle en $C_2$–$C_8$ ou un alkyle en $C_1$–$C_8$ qui porte un radical –OH, –Cl, alcoxy en $C_1$–$C_4$, –CN, alcoxycarbonyle en $C_2$–$C_5$, phényle, chlorophényle, alkylphényle en $C_7$–$C_{10}$ ou alcoxyphényle en $C_7$–$C_{10}$,

$R_{10}$ a l'une des significations qui viennent d'être données pour $R_9$ ou représente un phényle porteur d'un –Cl, d'un alkyle en $C_1$–$C_4$, d'un alcoxy en $C_1$–$C_4$ ou d'un alkylthio en $C_1$–$C_4$, un alcoxycarbonyle en $C_4$–$C_8$, un alkylaminocarbonyle à alkyle en $C_1$–$C_4$, un phénylaminocarbonyle ou un radical $-CONH_2$, ou encore

$R_9$ et $R_{10}$ forment ensemble et avec l'atome de carbone auquel ils sont liés un noyau de cycloalcane en $C_4$ à $C_6$, et $R_{11}$ représente:

– lorsque n est égal à 1, un alkyle en $C_2$–$C_{18}$, un phényle porteur d'un alkyle en $C_2$–$C_{12}$, d'un alcoxy en $C_2$–$C_4$, d'un alkylcarbonylamino à alkyle en $C_1$–$C_4$, d'un phénylcarbonylamino ou d'un benzoyle, un naphtyle non substitué ou porteur d'halogène, d'un alkyle en $C_1$–$C_{12}$ ou d'un alcoxy en $C_1$–$C_4$, un cycloalkyle en $C_5$ ou $C_6$, un aralkyle en $C_7$–$C_9$, un oxo-2 bornyle-10, un $-CF_3$, un $-CCl_3$, un –F ou un $-NH_2$, et

–lorsque n est égal à 2, un radical $-(CH_2)_m-$ dont l'indice m désigne un nombre de 2 à 8, ou un radical phénylène ou naphthylène non substitué ou porteur d'un alkyle en $C_1$–$C_{12}$.

10. Composés de formule II selon la revendication 1.

11. Composition selon la revendication 1 caractérisée en ce que la composition durcissable contient de 0,1 à 10% en poids, par rapport à la résine sans solvant, d'un catalyseur de durcissement de formule 1 ou de formule II.

12. Composition selon la revendication 1 caractérisée en ce que la résine est un mélange d'une résine aminée et d'une résine contenant des liaisons éthyléniques.

13. Composition selon la revendication 1 caractérisée en ce qu'elle contient, comme résine durcissable par un acide, une résine phénolique, une résine phénol-formaldéhyde, une résine urée-formaldéhyde ou un mélange d'une telle résine et d'une autre résine durcissable par un acide.

14. Composition selon la revendication 1 caractérisée en ce qu'elle contient, comme résine, un mélange d'acrylates et de résines de mélamine (systèmes hybrides) et, en outre, des amorceurs de polymérisation radicalaire et, éventuellement, des photo-amorceurs.

15. Composition selon la revendication 1 caractérisée en ce qu'elle contient, en plus de la résine et du catalyseur de durcissement, des additifs pris parmi ceux qui sont couramment utilisés dans l'industrie des résines.

16. Procédé pour durcir des résines susceptibles d'être durcies par des acides et contenant un catalyseur de durcissement selon la revendication 1, procédé caractérisé en ce qu'on expose la résine à un rayonnement de courte longueur d'onde, puis on la chauffe.

17. Application d'une composition selon la revendication 1 pour le peinturage industriel.

18. Application d'une composition selon la revendication 1 pour l'impression sur tôles.

19. Application d'une composition selon la revendication 1 pour la fabrication d'un moule à relief.